(19) Europäisches Patentamt
European Patent Office
Office européen des brevets

(11) **EP 2 545 304 B1**

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(21) Anmeldenummer: **11703668.1**

(22) Anmeldetag: **14.02.2011**

(51) Int Cl.:
*F16H 61/04* (2006.01)  *F16H 3/12* (2006.01)
*F16H 59/42* (2006.01)  *F16H 59/40* (2006.01)
*B60W 50/00* (2006.01)

(86) Internationale Anmeldenummer:
**PCT/EP2011/052088**

(87) Internationale Veröffentlichungsnummer:
**WO 2011/110400 (15.09.2011 Gazette 2011/37)**

(54) **VERFAHREN ZUR STEUERUNG EINER GETRIEBEBREMSE**

METHOD FOR CONTROLLING A TRANSMISSION BRAKE

PROCÉDÉ POUR LA COMMANDE D'UN FREIN D'ENGRENAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2010 DE 102010002764**

(43) Veröffentlichungstag der Anmeldung:
**16.01.2013 Patentblatt 2013/03**

(73) Patentinhaber: **ZF Friedrichshafen AG 88038 Friedrichshafen (DE)**

(72) Erfinder: **GANSOHR, Marcus 88682 Salem (DE)**

(56) Entgegenhaltungen:
**DE-A1- 10 330 517      DE-A1- 19 652 916
DE-B3-102005 032 225   US-A1- 2007 042 865**

**Beschreibung**

Die Erfindung betrifft ein Verfahren zur Steuerung einer Getriebebremse eines in Vorgelegebauweise ausgeführten und mit Klauenkupplungen versehenen automatisierten Schaltgetriebes, die mit einer eingangsseitigen Getriebewelle in Wirkverbindung steht und mittels eines Einlassventils und eines Auslassventils, die jeweils als ein 2/2-Wege-Magnetschaltventil ausgebildet sind, hydraulisch oder pneumatisch betätigbar ist, wobei bei einer Hochschaltung von einem Lastgang in einen Zielgang nach dem Auslegen des Lastgangs zur Synchronisierung des Zielgangs zunächst das Einlassventil geöffnet und das Auslassventil geschlossen wird, nach dem Einstellen eines Bremsmomentes das Einlassventil geschlossen wird, und während des Abbremsens der eingangsseitigen Getriebewelle der Zeitraum bis zur Ausgabe eines Abschaltsignals zum Öffnen des Auslassventils in Abhängigkeit einer Eingangsdrehzahl und deren Gradient sowie einer Ausgangsdrehzahl und deren Gradient derart bestimmt wird, dass die Eingangsdrehzahl nach dem Abschalten der Getriebebremse weitgehend einer vorgegebenen Synchrondrehzahl entspricht.

Ein für einen Längseinbau vorgesehenes, in Vorgelegebauweise ausgeführtes Schaltgetriebe weist üblicherweise eine Eingangswelle, mindestens eine Vorgelegewelle, und eine Ausgangswelle auf. Die Eingangswelle ist über eine als Anfahr- und Schaltkupplung wirksame Motorkupplung mit der Triebwelle des Antriebsmotors verbindbar und von dieser trennbar. Die Vorgelegewelle ist achsparallel zu der Eingangswelle angeordnet und steht mit dieser permanent über eine zumeist aus einem Stirnzahnradpaar mit zwei auf der jeweiligen Getriebewelle (Eingangswelle und Vorgelegewelle) drehfest angeordneten Festrädern gebildeten Eingangskonstante in Triebverbindung. Die Ausgangswelle ist achsparallel zu der Vorgelegewelle und koaxial zu der Eingangswelle angeordnet und selektiv über mehrere Gangstufen unterschiedlicher Übersetzung mit der Vorgelegewelle verbindbar. Die Gangstufen sind üblicherweise als Stirnzahnradpaare mit jeweils einem auf der einen Getriebewelle (Vorgelegewelle oder Ausgangswelle) drehfest angeordneten Festrad und einem auf der anderen Getriebewelle (Ausgangswelle oder Vorgelegewelle) drehbar gelagerten Losrad ausgebildet. Zur Schaltung einer Gangstufe, d.h. der Herstellung einer Triebverbindung zwischen der Vorgelegewelle und der Ausgangswelle mit der Übersetzung der betreffenden Gangstufe, ist jedem Losrad eine Gangkupplung zugeordnet. Die Losräder benachbarter Gangstufen sind üblicherweise zumindest paarweise auf derselben Getriebewelle angeordnet, so dass die Gangkupplungen entsprechend paarweise in Schaltpaketen mit jeweils einer gemeinsamen Schaltmuffe zusammengefasst sind.

Der Schaltungsablauf einer Hochschaltung von einem Lastgang in einen höheren Zielgang beginnt allgemein damit, dass das von dem Antriebsmotor abgegebene Drehmoment reduziert und in etwa gleichzeitig die Motorkupplung geöffnet wird, bevor der Lastgang ausgelegt wird. Danach erfolgt die Synchronisierung des Zielgangs, indem die Eingangsdrehzahl, d.h. die durch die Drehzahl der Eingangswelle oder der Vorgelegewelle bestimmte Drehzahl an dem eingangsseitigen Teil der Gangkupplung des Zielgangs, auf die durch die Drehzahl der Ausgangswelle bestimmte Synchrondrehzahl an dem ausgangsseitigen Teil der Gangkupplung des Zielgangs abgesenkt wird. Danach wird der Zielgang eingelegt, und anschließend in etwa gleichzeitig die Motorkupplung geschlossen und das abgegebene Drehmoment des Antriebsmotors wieder erhöht. Bei automatisierten Schaltgetrieben wird die Eingangsdrehzahl üblicherweise mittels eines an der Eingangswelle angeordneten Drehzahlsensors erfasst, wogegen die Ausgangsdrehzahl mittels eines an der Ausgangswelle angeordneten Drehzahlsensors erfasst wird. Für die Vergleichbarkeit beider Drehzahlen ist es erforderlich, diese auf eine einzige Getriebewelle zu beziehen, d.h. entsprechend umzurechnen. Da es aber besonders bei paarweise wechselnder Anordnung der Losräder auf der Vorgelegewelle und der Ausgangswelle relativ umständlich wäre, die Drehzahlen jeweils auf die an sich relevante Getriebewelle mit der Gangkupplung des jeweiligen Zielgangs umzurechnen, ist es üblich, beide Drehzahlen jeweils unabhängig von der Anordnung des betreffenden Losrades einheitlich auf dieselbe Getriebewelle, vorzugsweise auf die Eingangswelle, zu beziehen. Hierzu ist es nur erforderlich, die an der Ausgangswelle erfasste Ausgangsdrehzahl durch Multiplikation mit der Übersetzung des Zielgangs und der Übersetzung der Eingangskonstanten auf die Eingangswelle umzurechnen, wogegen die an der Eingangswelle erfasste Eingangsdrehzahl unverändert beibehalten werden kann. Vorliegend wird die an sich bekannte Umrechnung der Drehzahlen nicht explizit behandelt, sondern unter der Eingangsdrehzahl und der Ausgangsdrehzahl werden jeweils die bereits auf eine gemeinsame Getriebewelle, insbesondere die Eingangswelle, bezogenen Drehzahlen verstanden.

Allgemein als Klauenkupplungen bezeichnete unsynchronisierte Gangkupplungen weisen im Vergleich zu mittels Reibringen und Sperrverzahnungen synchronisierten Gangkupplungen einen deutlich einfacheren Aufbau, geringere Herstellungskosten, kompaktere Abmessungen, und eine wesentlich geringere Verschleiß- und Defektanfälligkeit auf. Bei einem mit Klauenkupplungen versehenen automatisierten Schaltgetriebe erfolgt die Synchronisierung des Zielgangs bei einer Hochschaltung bevorzugt über eine zentral angeordnete steuerbare Bremsvorrichtung, wie z.B. über eine mit der Eingangswelle oder der Vorgelegewelle in Wirkverbindung stehende Getriebebremse. Die Steuerung einer Getriebebremse und eines Schaltstellers zur Synchronisierung und zum Einlegen eines unsynchronisierten Zielgangs ist im Vergleich zur stellwegabhängigen stellgeschwindigkeits- und stellkraftvariablen Steuerung eines Schaltstellers zum Synchronisieren und Einlegen eines synchronisierten Zielgangs vergleichsweise einfach, da hierzu im Wesentlichen die Sensordaten der an der Eingangswelle und der Ausgangswelle angeordneten Drehzahlsensoren ausreichen.

Eine typische Getriebebremse eines in Vorgelegebauweise ausgeführten automatisierten Schaltgetriebes ist in der gattungsbildenden DE 196 52 916 B4 beschrieben. Diese bekannte Getriebebremse ist als eine hydraulisch oder pneumatisch betätigbare Lamellenbremse ausgebildet und an dem motorseitigen Ende der Vorgelegewelle des Schaltgetriebes angeordnet. Die Lamellen der Getriebebremse sind über innere und äußere Mitnahmeverzahnungen wechselweise drehfest mit der Vorgelegewelle und einem gehäusefest montierten Bremsgehäuse verbunden. Die Betätigung der Getriebebremse erfolgt über einen in einem Bremszylinder axialbeweglich angeordneten Kolben, der axial außen von dem steuerbaren Stelldruck in dem Druckraum des Bremszylinders beaufschlagt und hierdurch entgegen der Rückstellkraft einer zwischen dem Kolben und der Vorgelegewelle angeordneten Feder gegen die Lamellen gedrückt wird. Die Steuerung des in dem Druckraum wirksamen Stelldruckes erfolgt über ein eingangsseitig mit einer Druckleitung verbundenes Einlassventil und ein ausgangsseitig mit einer Drucklosleitung verbundenes Auslassventil, die ausgangs- bzw. eingangsseitig über jeweils einen kurzen Kanal mit dem Druckraum des Bremszylinders in Verbindung stehen. Die beiden Ventile können wahlweise als 2/2-Wege-Magnetschaltventile, die einfache Steuerungsabläufe ermöglichen und der vorliegenden Erfindung zu Grunde liegen, oder als 2/2-Wege-Magnettaktventile, die kompliziertere Regelungsabläufe ermöglichen, ausgeführt sein.

In der DE 103 05 254 A1 ist ein Verfahren zur Steuerung einer derartigen Getriebebremse eines in Vorgelegebauweise ausgeführten und mit Klauenkupplungen versehenen automatisierten Schaltgetriebes beschrieben, bei dem während der hochschaltungsbedingten Abbremsung der Vorgelegewelle die Anzahl der Programmzyklen bzw. der Zeitraum bis zum Erreichen der Synchrondrehzahl unter Berücksichtigung des Gradienten der Ausgangsdrehzahl ermittelt wird. Hierdurch wird berücksichtigt, dass die durch die Ausgangsdrehzahl bestimmte Synchrondrehzahl keine Konstante darstellt, sondern während der schaltungsbedingten Zug- oder Schubkraftunterbrechung, z.B. beim Befahren einer Steigungsstrecke, abfallen und, z.B. beim Befahren einer Gefällstrecke, ansteigen kann. Zur Ermittlung des Synchronzeitpunktes wird ein sogenannter Summengradient gebildet, der als Differenz der Gradienten der Ausgangsdrehzahl und der Eingangsdrehzahl eine Art Effektivgradient darstellt. Dieses bekannte Verfahren geht jedoch davon aus, dass die Getriebebremse mit Erreichen des Synchronzeitpunktes spontan, d.h. ohne eine zeitliche Verzögerung bis zum Beginn des Abschaltvorgangs und ohne einen stetigen Abbau des Bremsmomentes, abgeschaltet wird, was aber mit der Realität nicht übereinstimmt.

In einem verbesserten Verfahren nach der DE 103 30 517 A1 ist daher eine Vorhaltezeit vorgesehen, durch die das Ansprechverhalten der Steuerungseinrichtung der Getriebebremse und der Getriebebremse selbst berücksichtigt wird. Das Signal zum Abschalten der Getriebebremse wird in diesem Verfahren um eine Vorhaltezeit vor Erreichen des ermittelten Synchronzeitpunktes ausgegeben. Des weiteren ist in diesem Verfahren vorgesehen, dass die Qualität von Hochschaltungen im Hinblick auf das Erreichen eines vorgegebenen Zieldrehzahlfensters zum Zeitpunkt des Einrückens der Gangkupplung des Zielgangs bewertet wird, und dass die Vorhaltezeit in Abhängigkeit der Qualität der jeweiligen Hochschaltung unverändert beibehalten, korrigiert, oder neu berechnet wird. In diesem bekannten Verfahren werden jedoch der stetige Abbau des Bremsmomentes der Getriebebremse während des Abschaltvorgangs und der Einfluss von Betriebsparametern, wie z.B. der Betriebstemperatur der Getriebebremse, auf das Ansprechverhalten und den Abschaltvorgang nicht explizit erfasst und demzufolge mit der Vorhaltezeit nur pauschal berücksichtigt, was jedoch mit einer gewissen Ungenauigkeit dieses Verfahrens verbunden ist.

Es ist daher die Aufgabe der vorliegenden Erfindung, ein Verfahren zur Steuerung einer Getriebebremse der eingangs genannten Art eines in Vorgelegebauweise ausgeführten und mit Klauenkupplungen versehenen automatisierten Schaltgetriebes anzugeben, mit dem die Steuerungseigenschaften der Getriebebremse genauer berücksichtigt werden, und somit die Schaltqualität von Hochschaltungen des Schaltgetriebes weiter verbessert wird.

Diese Aufgabe ist erfindungsgemäß in Verbindung mit dem Oberbegriff von Anspruch 1 dadurch gelöst, dass die aktuelle Eingangsdrehzahl $n_{E\_akt}$ und die aktuelle Ausgangsdrehzahl $n_{A\_akt}$ sensorisch erfasst und daraus jeweils die Gradienten der Eingangsdrehzahl $\Delta n_E / \Delta t$ und der Ausgangsdrehzahl $\Delta n_A / \Delta t$ berechnet werden, dass der Drehzahlverlauf der Eingangsdrehzahl $n_E(t)$ während des bevorstehenden Abschaltvorgangs der Getriebebremse in Abhängigkeit des Gradienten der Eingangsdrehzahl $\Delta n_E / \Delta t$ mittels einer quadratischen Zeitfunktion bestimmt wird, dass der optimale Zeitpunkt $t_{Sync}$ zum Erreichen der Synchrondrehzahl $n_{Sync}$ während des Abschaltvorgangs der Getriebebremse mittels des Drehzahlverlaufs der Eingangsdrehzahl $n_E(t)$ in Abhängigkeit des Gradienten der Ausgangsdrehzahl $\Delta n_A / \Delta t$ bestimmt wird, und dass der Zeitraum bis zur Ausgabe des Abschaltsignals $T_{SA}$ in Abhängigkeit der aktuellen Eingangsdrehzahl $n_{E\_akt}$ und deren Gradient $\Delta n_E / \Delta t$ sowie der aktuellen Ausgangsdrehzahl $n_{A\_akt}$ und deren Gradient $\Delta n_A / \Delta t$ durch eine Rückrechnung von dem Zeitpunkt $t_{Sync}$ des Erreichens der Synchrondrehzahl $n_{Sync}$ unter Berücksichtigung einer Abschalttotzeit $T_{TA}$ der Getriebebremse zwischen der Ausgabe des Abschaltsignals $(t_{SA})$ und dem Beginn des Abschaltvorgangs $(t_{Abs0})$ ermittelt wird.

Vorteilhafte Ausgestaltungen und Weiterbildungen des erfindungsgemäßen Verfahrens sind in den Ansprüchen 2 bis 14 angegeben.

Die Erfindung geht von einer Getriebebremse aus, die in einem in Vorgelegebauweise ausgeführten und mit Klauenkupplungen versehenen automatisierten Schaltgetriebe angeordnet ist und mit einer eingangsseitigen Getriebewelle, d.h. der Eingangswelle oder einer Vorgelegewelle, in Wirkverbindung steht. Zudem wird in der Erfindung vorausgesetzt, dass die Getriebebremse mittels eines Einlassventils und eines Auslassventils, die jeweils als ein 2/2-Wege-Magnetschaltventil ausgebildet sind, hydraulisch oder pneumatisch betätigbar ist. Bei einer Hochschaltung von einem Lastgang in einen Zielgang wird nach dem Auslegen des Lastgangs zur Synchronisierung des Zielgangs zunächst das Einlassventil geöffnet und das Auslassventil geschlossen. Danach wird nach dem Einstellen des weitgehend konstanten Bremsmomentes $M_{Bro}$ das Einlassventil wieder geschlossen und während des Abbremsens der eingangsseitigen Getriebewelle der Zeitraum bis zur Ausgabe eines Abschaltsignals $T_{SA}$ zum Öffnen des Auslassventils, durch das die Getriebebremse abgeschaltet wird, bestimmt. Dieser Abschaltsignalzeitraum $T_{SA}$ wird in Abhängigkeit der aktuellen Eingangsdrehzahl $n_{E\_akt}$ und deren Gradient $\Delta n_E / \Delta t$ sowie der aktuellen Ausgangsdrehzahl $n_{A\_akt}$ und deren Gradient $\Delta n_A / \Delta t$ derart bestimmt, dass die Eingangsdrehzahl $n_E$ nach dem Abschalten der Getriebebremse weitgehend einer vorgegebenen Synchrondrehzahl $n_{Sync}$ entspricht ($n_E \approx n_A$).

Dadurch, dass der Drehzahlverlauf der Eingangsdrehzahl $n_E(t)$ während des bevorstehenden Abschaltvorgangs der Getriebebremse mittels einer quadratischen Zeitfunktion bestimmt, d.h. vorhergesagt wird, entspricht dieser Drehzahlverlauf $n_E(t)$ bei Verwendung mindestens einer geeigneten, für den Abbau des Gradienten der Eingangsdrehzahl $\Delta n_E / \Delta t$ charakteristischen Kenngröße mit hoher Genauigkeit dem tatsächlichen Drehzahlverlauf der Eingangsdrehzahl. Demzufolge wird, ausgehend von dem auch bestimmten optimalen Zeitpunkt $t_{Sync}$ zum Erreichen der Synchrondrehzahl $n_{Sync}$ und unter Berücksichtigung einer praktisch vorhandenen Abschalttotzeit $T_{TA}$ der Getriebebremse zwischen der Ausgabe des Abschaltsignals ($t_{SA}$) und dem Beginn des Abschaltvorgangs ($t_{Abs0}$), auch der Abschaltsignalzeitraum $T_{SA}$ bis zur Ausgabe des Abschaltsignals zum Öffnen des Auslassventils derart exakt bestimmt, dass die Eingangsdrehzahl $n_E$ nach dem Abschalten der Getriebebremse die vorgegebene Synchrondrehzahl $n_{Sync}$ mit hoher Genauigkeit erreichen kann ($n_E = n_A$). Eine an der Gangkupplung des Zielgangs zum Zeitpunkt des Einrückens durchaus erwünschte kleine Drehzahldifferenz, mit der eine Zahn-auf-Zahn-Stellung vermeidbar und diese bei einem Auftreten selbsttätig lösbar ist, kann in an sich bekannter Weise durch eine um ein geringes Zeitintervall $\Delta t_{SA}$ frühere oder spätere Ausgabe des Abschaltsignals zum Öffnen des Auslassventils erreicht werden. Gegenüber den bislang bekannten Verfahren zur Steuerung einer Getriebebremse der eingangs genannten Art ist das erfindungsgemäße Verfahren deutlich genauer und erfordert daher in der Praxis keine Korrekturschritte.

In guter Übereinstimmung mit den tatsächlichen Drehzahlverläufen der Eingangsdrehzahl $n_E$ und der Ausgangsdrehzahl $n_A$ werden der Gradient der Eingangsdrehzahl $\Delta n_E / \Delta t$ bis zum Beginn des Abschaltvorgangs ($t_{Abs0}$) und der Gradient der Ausgangsdrehzahl $\Delta n_A / \Delta t$ bis zum Erreichen der Synchrondrehzahl $n_{Sync}$ jeweils als konstant angenommen und als Differenzenquotient aus zwei aktuell aufeinanderfolgend erfassten Drehzahlwerten $n_{E\_i}$ $n_{E\_i-1}$; $n_{A\_i}$ $n_{A\_i-1}$ und der Zeitspanne zwischen der Erfassung dieser Drehzahlwerte $t_i - t_{i-1}$ gemäß $\Delta n_E / \Delta t = (n_{E\_1} - n_{E\_i-1}) / (t_i - t_{i-1})$ und $\Delta n_A / \Delta t = (n_{A\_i} - n_{A\_i-1}) / (t_i - t_{i-1})$ berechnet, wobei mit $n_{E\_i}$ und $n_{A\_i}$ die zum Zeitpunkt $t_i$ erfassten Werte der Eingangsdrehzahl $n_E$ und der Ausgangsdrehzahl $n_A$, und mit $n_{E\_i-1}$ und $n_{A\_i-1}$ die entsprechenden, zu dem vorhergehenden Zeitpunkt $t_{i-1}$ erfassten Drehzahlwerte bezeichnet sind.

Da die über Drehzahlsensoren erfassten Drehzahlsignale $n_E(t)$, $n_A(t)$ verrauscht und/oder mit Schwingungen überlagert sein können, kann zur vorgenannten Ermittlung der Drehzahlgradienten $\Delta n_E / \Delta t$ und $\Delta n_A / \Delta t$ eine vorherige Glättung des jeweiligen Drehzahlsignals, z.B. in Form einer Tiefpassfilterung, oder ein numerisches Verfahren zur Ermittlung der Drehzahlgradienten $\Delta n_E / \Delta t$, $\Delta n_A / \Delta t$ erforderlich sein.

Der Gradient der Eingangsdrehzahl $\Delta n_E / \Delta t$ wird im Wesentlichen durch das in der Bremsphase konstante Bremsmoment $M_{Br0}$ der Getriebebremse bestimmt. Allgemein wird die Eingangswelle jedoch auch durch ein resultierendes Widerstandsmoment $M_W$ abgebremst, das aus den auf die eingangsseitigen Getriebewellen und Zahnräder wirksamen Lager-, Verzahnungs- und Strömungswiderständen resultiert. Das Widerstandsmoment $M_W$ ist gegenüber dem Bremsmoment $M_{Br0}$ der Getriebebremse vergleichsweise niedrig und kann während des Hochschaltvorgangs als konstant angesehen werden. Der Gradient der Eingangsdrehzahl $\Delta n_E / \Delta t$ setzt sich somit additiv aus einem relativ großen Anteil $(\Delta n_E / \Delta t)_{Br}$, der durch das Bremsmoment $M_{Br0}$ der Getriebebremse hervorgerufen wird, und aus einem relativ kleinen Anteil $(\Delta n_E / \Delta t)_W$, der durch das auf die Eingangswelle wirksame Widerstandsmoment $M_W$ hervorgerufen wird, zusammen ($\Delta n_E / \Delta t = (\Delta n_E / \Delta t)_{Br} + (\Delta n_E / \Delta t)_W$). Im Idealfall ist das Widerstandsmoment $M_W$ jedoch nahezu gleich Null und kann in diesem Fall zur Ermittlung des Abschaltsignalzeitraums $T_{SA}$ vernachlässigt werden $((\Delta n_E / \Delta t)_W = 0$; $\Delta n_E / \Delta t = (\Delta n_E / \Delta t)_{Br})$.

Der Gradient der Ausgangsdrehzahl $\Delta n_A / \Delta t$ kann aufgrund seiner im Vergleich zu dem Gradienten der Eingangsdrehzahl $\Delta n_E / \Delta t$ absolut niedrigen Höhe mit hinreichender Genauigkeit ebenfalls als konstant, d.h. der Drehzahlverlauf der Ausgangsdrehzahl $n_A(t)$ aus diesem Grund als linear angesehen werden.

Der Drehzahlverlauf der Eingangsdrehzahl $n_E(t)$ während des Abschaltvorgangs der Getriebebremse kann mit der Zeitfunktion

$$n_E(t) = n_{E\_0} + \Delta n_E / \Delta t * t + F_{Abs} * t^2$$

ermittelt werden, wobei mit $n_{E\_0}$ die Eingangsdrehzahl zu Beginn des Abschaltvorgangs ($t_{Abs0}$) und mit $F_{Abs}$ ein vorab bestimmter, für den Zeitverlauf des Abschaltvorgangs der Getriebebremse charakteristischer Abschaltfaktor bezeichnet sind. Diese Gleichung resultiert aus der Überlegung, dass der zunächst konstante Gradient der Eingangsdrehzahl $\Delta n_E$ / $\Delta t$ während des Abschaltvorgangs der Getriebebremse mit einer quadratischen Charakteristik, deren Stärke durch den Abschaltfaktor $F_{Abs}$ bestimmt ist, bis auf den auf das Widerstandsmoment $M_W$ zurückzuführenden Gradienten der Eingangsdrehzahl $(\Delta n_E$ / $\Delta t)_W$ bzw., wenn dieser sehr klein oder gleich Null ist, bis auf Null abgebaut wird.

Alternativ kann der Drehzahlverlauf der Eingangsdrehzahl ($n_E(t)$) während des Abschaltvorgangs der Getriebebremse jedoch auch mit der Zeitfunktion

$$n_E(t) = n_{E\_0} + (M_{Br0} + M_W) / (J_{GE} * 2\pi) * t - M_{Br0} / (J_{GE} * 4\pi * T_{Abs}) * t^2$$

oder mit der Zeitfunktion

$$n_E(t) = n_{E\_0} + \Delta n_E / \Delta t * t - 1 / (2T_{Abs}) * (\Delta n_E / \Delta t)_{Br} * t^2$$

ermittelt werden, wobei mit $M_{Br0}$ das Bremsmoment der Getriebebremse zu Beginn des Abschaltvorgangs ($t_{Abs0}$), mit $M_W$ ein während des Hochschaltvorgangs auf die Eingangswelle des Schaltgetriebes wirksames und als konstant angenommenes Widerstandsmoment, mit $J_{GE}$ das Massenträgheitsmoment der rotierenden Bauteile des eingangsseitigen Teils des Schaltgetriebes, und mit $T_{Abs}$ die Abschaltdauer der Getriebebremse unter der Annahme eines linearen Abbaus des Bremsmomentes gemäß der Gleichung $M_{Br}(t) = M_{Br0} (1 - t/T_{Abs})$ bezeichnet sind.

Diese beiden Gleichungen sind aus der allgemeinen Bewegungsgleichung für rotierende Systeme ableitbar, die in dem vorliegenden Anwendungsfall für den eingangsseitigen Teil des Schaltgetriebes durch

$$J_{GE} * 2\pi * dn_E / dt = M_W + M_{Br}(t)$$

gegeben ist. Durch das Einsetzen der vorgenannten Formel für den linearen Abbau des Bremsmomentes $M_{Br}(t)$ und eine geeignete Umstellung ergibt sich daraus die Beziehung

$$dn_E = M_W / (J_{GE} * 2\pi) \, dt + M_{Br0} / (J_{GE} * 2\pi) * (1 - t / T_{Abs}) \, dt \, ,$$

die durch Integration von t = 0 (Beginn des Abschaltvorgangs der Getriebebremse $t_{Abs0}$) bis t = t (beliebiger Zeitpunkt innerhalb des Abschaltvorgangs) zu der ersten Gleichung

$$n_E(t) = n_{E\_0} + (M_{Br0} + M_W) / (J_{GE} * 2\pi) * t - M_{Br0} / (J_{GE} * 4\pi * T_{Abs}) * t^2$$

führt.

Aus der allgemeinen Bewegungsgleichung für den dem Abschaltvorgang vorausgehenden Zeitabschnitt mit konstanter Verzögerung

$$J_{GE} * 2\pi * \Delta n_E / \Delta t = J_{GE} * 2\pi * ((\Delta n_E / \Delta t)_W + (\Delta n_E / \Delta t)_{Br}) = M_W + M_{Br0}$$

ergeben sich die Beziehungen

$$\Delta n_E / \Delta t = (M_{Br0} + M_W) / (J_{GE} * 2\pi)$$

und

$$(\Delta n_E / \Delta t)_{Br} = M_{Br0} / (J_{GE} * 2\pi),$$

die eingesetzt in die erste Gleichung die gleichwertige zweite Gleichung

$$n_E(t) = n_{E\_0} + \Delta n_E / \Delta t * t - 1 / (2T_{Abs}) * (\Delta n_E / \Delta t)_{Br} * t^2$$

ergeben.

Die von dem Gradienten der Ausgangsdrehzahl $\Delta n_A / \Delta t$ abhängige Bestimmung des optimalen Zeitpunktes $t_{Sync}$ zum Erreichen der Synchrondrehzahl $n_{Sync}$ erfolgt zweckmäßig derart, dass dieser bei einem Gradienten der Ausgangsdrehzahl größer oder gleich dem auf das resultierende Widerstandsmoment $M_W$ zurückzuführenden Gradienten der Eingangsdrehzahl ($\Delta n_A / \Delta t \geq (\Delta n_E / \Delta t)_W$) als derjenige Zeitpunkt $t_{Sync}$ bestimmt wird, bei dem der Gradient der Eingangsdrehzahl $dn_E / dt$ den Wert dieses Gradienten $(\Delta n_E / \Delta t)_W$ erreicht ($dn_E / dt = (\Delta n_E / \Delta t)_W$), und bei einem Gradienten der Ausgangsdrehzahl kleiner dem auf das Widerstandsmoment $M_W$ zurückzuführenden Gradienten der Eingangsdrehzahl ($\Delta n_A / \Delta t < (\Delta n_E / \Delta t)_W$) als derjenige Zeitpunkt $t_{Sync}$ bestimmt wird, bei dem der Gradient der Eingangsdrehzahl $dn_E / dt$ den Wert des Gradienten der Ausgangsdrehzahl $\Delta n_A / \Delta t$ erreicht ($dn_E / dt = \Delta n_A / \Delta t$).

Durch Differenzieren der Gleichung von Anspruch 3, Einsetzen der jeweiligen Bedingung für das Erreichen von $t_{Sync}$, und Auflösung nach $t = t_{Sync}$ ergibt sich, dass der optimale Zeitpunkt $t_{Sync}$ zum Erreichen der Synchrondrehzahl $n_{Sync}$ bei einem Gradienten der Ausgangsdrehzahl $\Delta n_A / \Delta t \geq (\Delta n_E / \Delta t)_W$ mit der Gleichung

$$t_{Sync} = - 1/2F_{Abs} * (\Delta n_E / \Delta t)_{Br}$$

und bei einem Gradienten der Ausgangsdrehzahl $\Delta n_A / \Delta t < (\Delta n_E / \Delta t)_W$ mit der Gleichung

$$t_{Sync} = 1/2F_{Abs} * (\Delta n_A / \Delta t - \Delta n_E / \Delta t)$$

berechnet werden kann.

Durch Differenzieren der zweiten Gleichung von Anspruch 4, Einsetzen der jeweiligen Bedingung für das Erreichen von $t_{Sync}$, und Auflösung nach $t = t_{Sync}$ ergibt sich, dass der optimale Zeitpunkt $t_{Sync}$ zum Erreichen der Synchrondrehzahl $n_{Sync}$ alternativ bei einem Gradienten der Ausgangsdrehzahl $\Delta n_A / \Delta t \geq (\Delta n_E / \Delta t)_W$ mit der Gleichung $t_{Sync} = T_{Abs}$ und bei einem Gradienten der Ausgangsdrehzahl $\Delta n_A / \Delta t < (\Delta n_E / \Delta t)_W$ mit der Gleichung

$$t_{Sync} = T_{Abs} * (1 + ((\Delta n_E / \Delta t)_W - (\Delta n_A / \Delta t)) / (\Delta n_E / \Delta t)_{Br})$$

berechnet werden kann, wobei zur Berechnung des Synchronzeitpunktes $t_{Sync}$ entsprechend der ersten Gleichung von Anspruch 4 bzw. der vorgenannten Beziehungen für die konstanten Gradienten der Eingangsdrehzahl $(\Delta n_E / \Delta t)_W$, $(\Delta n_E / \Delta t)_{Br}$ vor dem Abschaltvorgang wahlweise anstelle des Terms $(\Delta n_E / \Delta t)_W$ auch der Term $M_W / (J_{GE} * 2\pi)$ und anstelle des Terms $(\Delta n_E / \Delta t)_{Br}$ der Term $M_{Br0} / (J_{GE} * 2\pi)$ verwendet werden können.

Zur Ableitung einer Formel zur Berechnung des Zeitraums bis zur Ausgabe des Abschaltsignals $T_{SA}$ zum Öffnen des Auslassventils der Getriebebremse sind zunächst die Zeitverläufe der Eingangsdrehzahl $n_E(t)$ und der Ausgangsdrehzahl $n_A(t)$, ausgehend von dem aktuellen, innerhalb der Phase mit konstanter Verzögerung der Eingangsdrehzahl $\Delta n_E / \Delta t$ liegenden Zeitpunkt abzuleiten. Für die Eingangsdrehzahl lautet die entsprechende Beziehung in Anlehnung an die Formel von Anspruch 3

$$n_{Sync} = n_E(t_{Sync}) = n_{E\_akt} + \Delta n_E / \Delta t * (T_{SA} + T_{TA} + T_{Sync}) + F_{Abs} * T_{Sync}^2 ,$$

und für die Ausgangsdrehzahl

$$n_{Sync} = n_A(t_{Sync}) = n_{A\_akt} + \Delta n_A / \Delta t * (T_{SA} + T_{TA} + T_{Sync}) ,$$

wobei mit $T_{SA}$ der gesuchte Zeitraum bis zur Ausgabe des Abschaltsignals, mit $T_{TA}$ die Abschalttotzeit zwischen der Ausgabe des Abschaltsignals und dem Beginn des Abschaltvorgangs, und mit $T_{Sync}$ der Zeitraum bis zum Erreichen der Synchrondrehzahl $n_{Sync}$ innerhalb des Abschaltvorgangs bezeichnet sind. Durch Einsetzen der zuvor abgeleiteten Formeln für $t_{Sync}$, Subtraktion beider Formeln, und Auflösung nach $T_{SA}$ ergibt sich, dass der Zeitraum bis zur Ausgabe des Abschaltsignals $T_{SA}$ zum Öffnen des Auslassventils bei einem Gradienten der Ausgangsdrehzahl $\Delta n_A / \Delta t \geq (\Delta n_E / \Delta t)_W$ mit der Gleichung

$$T_{SA} = (n_{E\_akt} - n_{A\_akt}) / ((\Delta n_A / \Delta t) - (\Delta n_E / \Delta t)) - T_{TA} +$$

$$1/ 2F_{Abs} * (\Delta n_E / \Delta t)_{Br} * (1 + \tfrac{1}{2} (\Delta n_E / \Delta t)_{Br} / ((\Delta n_A / \Delta t) - (\Delta n_E / \Delta t))$$

und bei einem Gradienten der Ausgangsdrehzahl $\Delta n_A / \Delta t < (\Delta n_E / \Delta t)_W$ mit der Gleichung

$$T_{SA} = (n_{E\_akt} - n_{A\_akt}) / ((\Delta n_A / \Delta t) - (\Delta n_E / \Delta t)) - T_{TA} -$$

$$1/ 4F_{Abs} * ((\Delta n_A / \Delta t) - (\Delta n_E / \Delta t))$$

berechnet werden kann.

Eine derartige Vorgehensweise mit einer Formulierung der eingangsseitigen Synchrondrehzahl $n_{Sync} = n_E(t_{Sync})$ in Anlehnung an die zweite Formel von Anspruch 4 entsprechend

$$n_{Sync} = n_{E\_akt} + \Delta n_E / \Delta t * (T_{SA} + T_{TA} + T_{Sync}) - 1/ (2T_{Abs}) * (\Delta n_E / \Delta t)_{Br} * T_{Sync}^{2}$$

ergibt, dass der Zeitraum bis zur Ausgabe des Abschaltsignals $T_{SA}$ zum Öffnen des Auslassventils bei einem Gradienten der Ausgangsdrehzahl $\Delta n_A / \Delta t \geq (\Delta n_E / \Delta t)_W$ mit der Gleichung

$$T_{SA} = (n_{E\_akt} - n_{A\_akt}) / ((\Delta n_A / \Delta t) - (\Delta n_E / \Delta t)) - T_{TA} -$$

$$T_{Abs} * (1 + \tfrac{1}{2} (\Delta n_E / \Delta t)_{Br} / ((\Delta n_A / \Delta t) - (\Delta n_E / \Delta t))$$

und bei einem Gradienten der Ausgangsdrehzahl $\Delta n_A / \Delta t < (\Delta n_E / \Delta t)_W$ mit der Gleichung

$$T_{SA} = (n_{E\_akt} - n_{A\_akt}) / ((\Delta n_A / \Delta t) - (\Delta n_E / \Delta t)) - T_{TA} -$$

$$\tfrac{1}{2} T_{Abs} * (1 + ((\Delta n_E / \Delta t)_W - (\Delta n_A / \Delta t)) / (\Delta n_E / \Delta t)_{Br})$$

berechnet werden kann.

Bei einem absolut extrem niedrigen Gradienten der Ausgangsdrehzahl $\Delta n_A / \Delta t$, d.h. wenn der Betrag des Gradienten der Ausgangsdrehzahl wesentlich kleiner ist als der Betrag des Gradienten der Eingangsdrehzahl ($|\Delta n_A / \Delta t| \ll |\Delta n_E / \Delta t|$) und/oder wenn der Gradient der Ausgangsdrehzahl nahezu gleich Null ist ($\Delta n_A / \Delta t \approx 0$), und bei einem zugleich vernachlässigbar kleinen Widerstandsmoment $M_W$ (($\Delta n_E / \Delta t)_W = 0$; $\Delta n_E / \Delta t = (\Delta n_E / \Delta t)_{Br}$) können die vorgenannten Gleichungen zur Berechnung des Zeitraums bis zur Ausgabe des Abschaltsignals $T_{SA}$ stark vereinfacht werden, so dass der Abschaltsignalzeitraum $T_{SA}$ in diesem Fall unabhängig von dem Gradienten der Ausgangsdrehzahl $\Delta n_A / \Delta t$ mit ausreichender Genauigkeit mit der Gleichung

$$T_{SA} = (n_{A\_akt} - n_{E\_akt}) / (\Delta n_E / \Delta t) - T_{TA} + 1 / 4F_{Abs} * (\Delta n_E / \Delta t)$$

oder mit der Gleichung

$$T_{SA} = (n_{A\_akt} - n_{E\_akt}) / (\Delta n_E / \Delta t) - T_{TA} - \tfrac{1}{2} T_{Abs}$$

berechnet werden kann.

Der auf das Widerstandsmoment $M_W$ zurückzuführende Gradient der Eingangsdrehzahl $(\Delta n_E / \Delta t)_W$ wird zweckmäßig nach dem Auslegen des Lastgangs und vor dem Einsetzen der Bremswirkung der Getriebebremse ermittelt. Dies erfolgt bevorzugt unmittelbar nach dem Öffnen des Einlassventils und dem Schließen des Auslassventils, da zu diesem Zeitpunkt der Lastgang sicher ausgelegt ist, eine durch den beim Öffnen der Trennkupplung entstehenden Entlastungsstoß angeregte Drehzahlschwingung weitgehend abgeklungen ist, und die Bremswirkung der Getriebebremse aufgrund der Vorbefüllung des Druckraums noch nicht eingesetzt hat.

Die zur Ermittlung des Drehzahlverlaufes der Eingangsdrehzahl $n_E(t)$ während des Abschaltvorgangs der Getriebebremse, des optimalen Zeitpunktes $t_{Sync}$ zum Erreichen der Synchrondrehzahl $n_{Sync}$ und des Zeitraums $T_{SA}$ bis zur Ausgabe des Abschaltsignals zum Öffnen des Auslassventils der Getriebebremse verwendeten Parameter, wie die Abschalttotzeit $T_{TA}$ und/oder der Abschaltfaktor $F_{Abs}$ und/oder die Abschaltdauer $T_{Abs}$ der Getriebebremse, werden vorab zweckmäßig in Abhängigkeit mindestens eines relevanten, d.h. das Betriebsverhalten der Getriebebremse beeinflussenden Betriebsparameters ermittelt und entsprechend parametriert in einem Datenspeicher eines Getriebesteuergerätes des Schaltgetriebes abgelegt.

Diese Parameter sind zwar weitgehend gerätespezifisch und teilweise abhängig von dem jeweiligen Massenträgheitsmoment $J_{GE}$ der mit der Eingangswelle des Schaltgetriebes in Triebverbindung stehenden Bauteile oder von dem durch das Volumen des Druckraums, der Länge und dem Durchmesser der Drucklosleitung und dem Strömungsquerschnitt des Auslassventils bestimmten Ansprechverhalten der Getriebebremse. Das eingangsseitige Massenträgheitsmoment $J_{GE}$ kann sich jedoch bei einem vorhandenen eingangsseitigen Nebenabtrieb in Abhängigkeit eines angekoppelten oder nicht angekoppelten Aggregats und bei einem Gruppengetriebe mit einer dem Hauptgetriebe vorgeschalteten Splitgruppe in Abhängigkeit des Schaltzustands der Splitgruppe ändern, was in dem vorliegenden Verfahren berücksichtigt wird.

Ebenso können sich zumindest einige der genannten Parameter in Abhängigkeit freier Betriebsparameter, wie z.B. des über den Bremsdruck eingestellten Bremsmomentes $M_{Br0}$ der Getriebebremse und/oder der Betriebstemperatur der Getriebebremse ändern, was in dem vorliegenden Verfahren ebenfalls berücksichtigt wird.

Liegt beispielsweise ein erhöhtes eingangsseitiges Massenträgheitsmoment $J_{GE}$ oder eine erhöhte zu synchronisierende Drehzahldifferenz $n_E - n_A$ vor, so wird zur Synchronisierung des Zielgangs über einen erhöhten Bremsdruck ein größeres Bremsmoment $M_{Br0}$ an der Getriebebremse eingestellt, damit die Synchronisierung und damit der gesamte Hochschaltvorgang in etwa dieselbe Zeitdauer erfordert wie ein Hochschaltvorgang bei niedrigerem eingangsseitigen Massenträgheitsmoment $J_{GE}$ oder einer geringeren zu synchronisierende Drehzahldifferenz $n_E - n_A$.

Durch einen Vergleich der quadratischen Terme der Gleichung aus Anspruch 3 und der ersten Gleichung aus Anspruch 4 ergibt sich, dass der Abschaltfaktor $F_{Abs}$ durch den Term $- M_{Br0} / (J_{GE} * 4\pi * T_{Abs})$ gegeben ist, weshalb die Gleichung $F_{Abs} = - M_{Br0} / (J_{GE} * 4\pi * T_{Abs})$ gilt. Demnach verhält sich der Abschaltfaktor $F_{Abs}$ proportional zur absoluten Höhe des eingestellten Bremsmomentes $M_{Br0}$ ($F_{Abs} \sim |M_{Br0}|$) und umgekehrt proportional zu dem eingangsseitigen Massenträgheitsmoment $J_{GE}$ und der Abschaltdauer $T_{Abs}$ ($F_{Abs} \sim 1 / J_{GE}$, $F_{Abs} \sim 1 / T_{Abs}$).

Da sich jedoch empirisch gezeigt hat, dass die Abschaltdauer $T_{Abs}$ proportional mit der absoluten Höhe des Bremsmomentes $M_{Br0}$ ansteigt, d.h. das Verhältnis aus Bremsmoment $M_{Br0}$ und Abschaltdauer $T_{Abs}$ konstant ist ($M_{Br0} / T_{Abs}$ = const.), verhält sich der Abschaltfaktor $F_{Abs}$ ohne die Berücksichtigung weiterer Betriebsparameter nur umgekehrt proportional zu dem eingangsseitigen Massenträgheitsmoment $J_{GE}$ ($F_{Abs} \sim 1 / J_{GE}$).

Als ein weiterer in dieser Hinsicht relevanter Betriebsparameter ist besonders die Betriebstemperatur der Getriebebremse anzusehen, da diese die Strömungseigenschaften des Druckmittels, den Reibwert der Reibbeläge, sowie die an den beweglichen Bauteilen der Betätigungseinrichtung der Getriebebremse wirksamen Reibungskräfte und damit das Betriebsverhalten der Getriebebremse wesentlich beeinflusst. Es ist daher vorgesehen, dass zumindest die Betriebstemperatur der Getriebebremse oder ersatzweise die Betriebstemperatur des Schaltgetriebes als relevanter Betriebsparameter verwendet und zu Beginn einer Hochschaltung sensorisch erfasst wird, und dass bei der Bestimmung des Drehzahlverlaufs der Eingangsdrehzahl $n_E(t)$ während des Abschaltvorgangs, des optimalen Zeitpunktes $t_{Sync}$ zum Erreichen der Synchrondrehzahl $n_{Sync}$, und des Zeitraums bis zur Ausgabe des Abschaltsignals $T_{SA}$ zum Öffnen des Auslassventils jeweils der dem erfassten Temperaturwert parametrisch nächstgelegene abgespeicherte Wert oder ein mittels des erfassten Temperaturwertes aus abgespeicherten Werten interpolierter Wert der Abschalttotzeit $T_{TA}$ und/oder des Abschaltfaktors $F_{Abs}$ und/oder der Abschaltdauer $T_{Abs}$ der Getriebebremse verwendet wird.

Zur Verdeutlichung der Erfindung ist der Beschreibung eine Zeichnung mit einem Ausführungsbeispiel beigefügt. In dieser zeigt

Fig. 1     die Drehzahlverläufe der Eingangsdrehzahl und der Ausgangsdrehzahl eines automatisierten Schaltgetriebes sowie die Spannungsverläufe der Magnetschaltventile einer zugeordneten Getriebebremse während einer Hochschaltung,

Fig. 2     den Bremsmomentverlauf während eines Abschaltvorgangs der Getriebebremse,

Fig. 3     die möglichen Drehzahlverläufe der Eingangsdrehzahl und der Ausgangsdrehzahl eines Schaltgetriebes während einer Hochschaltung bei unterschiedlichen Fahrwiderständen, und

Fig. 4     den Aufbau einer Getriebebremse in schematischer Form.

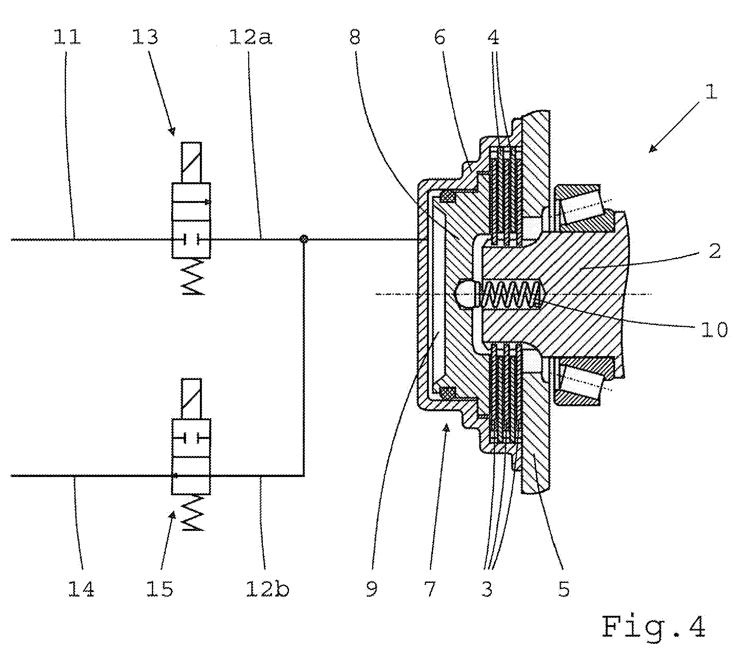

In Fig. 4 ist eine typische Getriebebremse 1 eines in Vorgelegebauweise ausgeführten und mit Klauenkupplungen versehenen automatisierten Schaltgetriebes dargestellt, bei dem das erfindungsgemäße Steuerungsverfahren anwendbar ist. Die Getriebebremse 1 ist als eine hydraulisch oder pneumatisch betätigbare Lamellenbremse ausgebildet und vorliegend an dem motorseitigen Ende einer Vorgelegewelle 2 des nicht näher dargestellten Schaltgetriebes angeordnet. Die Innen- und Außenlamellen 3, 4 der Getriebebremse 1 sind über innere und äußere Mitnahmeverzahnungen wechselweise drehfest mit der Vorgelegewelle 2 und einem an einer motorseitigen Stirnwand 5 des Getriebegehäuses montierten Bremsgehäuse 6 verbunden. Die Betätigung der Getriebebremse 1 erfolgt über einen in einem Bremszylinder 7 axialbeweglich angeordneten Kolben 8, der axial außen von dem steuerbaren Stelldruck in dem Druckraum 9 des Bremszylinders 7 beaufschlagt und hierdurch entgegen der Rückstellkraft einer zwischen dem Kolben 8 und der Vorgelegewelle 2 angeordneten Feder 10 gegen die Lamellen 3, 4 gedrückt wird. Die Steuerung des in dem Druckraum 9 wirksamen Stelldruckes erfolgt über ein eingangsseitig mit einer das verwendete Druckmittel führenden Druckleitung 11 und ausgangsseitig über eine Verbindungsleitung 12a mit dem Druckraum 9 verbundenes Einlassventil 13 und ein eingangs über eine Verbindungsleitung 12b mit dem Druckraum 9 und ausgangsseitig mit einer zu einem Ölsumpf oder einem Schalldämpfer führenden Drucklosleitung 14 verbundenes Auslassventil 15. Die beiden Ventile 13, 15 sind jeweils als ein 2/2-Wege-Magnetschaltventil ausgebildet, wobei das Einlassventil 13 im unbetätigten, d.h. unbestromten, Ruhezustand geschlossen und das Auslassventil 15 im unbetätigten Ruhezustand geöffnet ist.

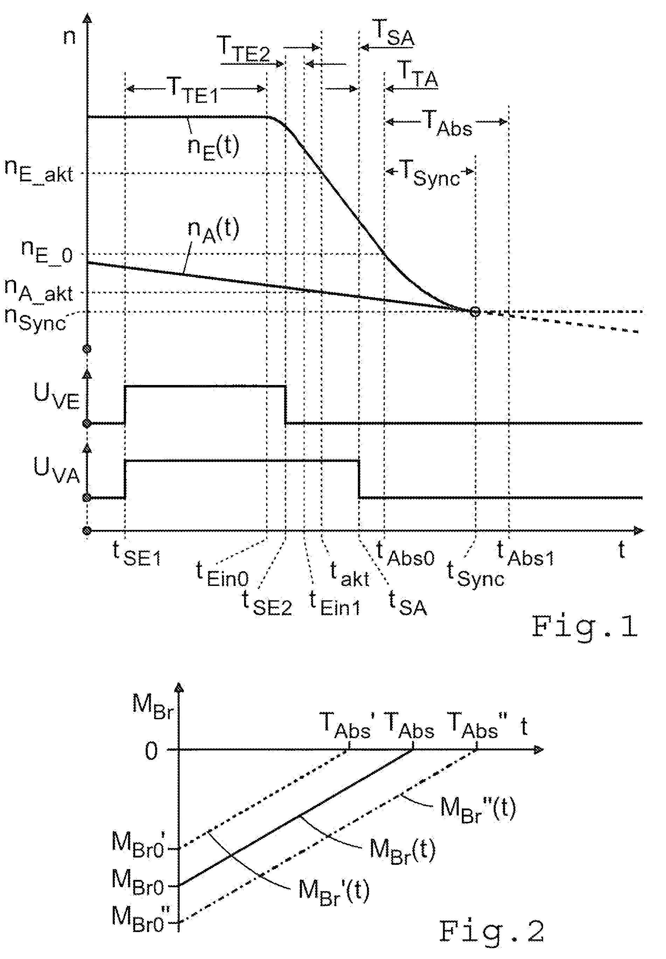

Eine Hochschaltung des Schaltgetriebes von einem Lastgang in einen höheren Zielgang beginnt mit dem Lastabbau des dem Schaltgetriebe eingangsseitig vorgeschalteten Antriebsmotors und der in etwa gleichzeitig erfolgenden Öffnung einer zwischen der Triebwelle des Antriebsmotors und der Eingangswelle des Schaltgetriebes angeordneten Motorkupplung. Danach erfolgt die Synchronisierung des Zielgangs durch eine Abbremsung der Vorgelegewelle 2 mittels der Getriebebremse 1. Die entsprechenden Zeitverläufe der auf die Eingangswelle bezogenen Eingangsdrehzahl $n_E(t)$, der auf die Eingangswelle bezogenen Ausgangsdrehzahl $n_A(t)$, und der durch die jeweilige Steuerspannung $U_{VE}(t)$, $U_{VA}(t)$ repräsentierten Schaltzustände des Einlassventils 13 und des Auslassventils 15 sind beispielhaft in Fig. 1 dargestellt.

Zur Vereinfachung der Darstellung und der verwendeten Gleichungen wird vorliegend von einem vernachlässigbar kleinen, auf die Eingangswelle des Schaltgetriebes wirksamen Widerstandsmoment $M_W$ ausgegangen, so dass der Gradient der Eingangsdrehzahl $\Delta n_E / \Delta t$ vor dem Einschalten und nach dem Abschaltvorgang der Getriebebremse 1 gleich Null ist, und der nach dem Einschalten und vor dem Abschaltvorgang der Getriebebremse konstante Gradient der Eingangsdrehzahl $\Delta n_E / \Delta t$ alleine durch das in dieser Phase konstante Bremsmoment $M_{Br0}$ der Getriebebremse erzeugt wird $((\Delta n_E / \Delta t)_W = 0; \Delta n_E / \Delta t = (\Delta n_E / \Delta t)_{Br})$.

Zunächst werden zum Zeitpunkt $t_{SE1}$ gleichzeitig das Einlassventil 13 geöffnet und das Auslassventil 15 geschlossen. Entsprechend steigen die Steuerspannungen $U_{VE}$, $U_{VA}$ des Einlassventils 13 und des Auslassventils 15 zu diesem Zeitpunkt von Null auf den Schaltwert an. Die Verzögerung der Eingangswelle beginnt nach Ablauf einer im Wesentlichen aus der Vorbefüllung des Druckraums 9 und der Verbindungsleitungen 12a, 12b resultierenden ersten Einschalttotzeit $T_{TE1}$ zum Zeitpunkt $t_{Ein0}$. Kurz danach wird das Einlassventil 13 zum Zeitpunkt $t_{SE2}$ durch die Abschaltung der Steuerspannung $U_{VE}$ wieder geschlossen, wodurch der in dem Druckraum 9 herrschende Bremsdruck eingeschlossen wird. Hierdurch stellt sich nach Ablauf einer relativ kurzen zweiten Einschalttotzeit $T_{TE2}$ zum Zeitpunkt $t_{Ein1}$ ein weitgehend konstantes Bremsmoment $M_{Br0}$ in der Getriebebremse 1 ein, das zu einer Verzögerung der über eine Eingangskonstante mit der Vorgelegewelle 2 in Triebverbindung stehenden Eingangswelle des Schaltgetriebes mit dem weitgehend konstanten Gradienten $\Delta n_E / \Delta t$ und somit zu einem linearen Abfall der Eingangsdrehzahl $n_E(t)$ führt.

In dieser Phase startet in zeitlicher Nähe, jedoch zu einem an sich beliebigen Zeitpunkt takt das erfindungsgemäße Verfahren zur Bestimmung des gesuchten Zeitpunktes $t_{SA}$ bzw. des gesuchten Zeitraums $T_{SA}$ bis zum Erreichen des Zeitpunktes $t_{SA}$, zu dem ein Abschaltsignal zum Öffnen des Auslassventils 15, d.h. zum Abschalten der Getriebebremse 1, ausgelöst wird.

Der Abschaltzeitpunkt $t_{SA}$ bzw. der Abschaltsignalzeitraum $T_{SA}$ soll in Abhängigkeit der Eingangsdrehzahl $n_E$ und deren Gradient $\Delta n_E / \Delta t$ sowie der Ausgangsdrehzahl $n_A$ und deren Gradient $\Delta n_A / \Delta t$ derart bestimmt werden, dass die Eingangsdrehzahl $n_E$ nach dem Abschalten der Getriebebremse 1 weitgehend der durch die Ausgangsdrehzahl $n_A$ bestimmten Synchrondrehzahl $n_{Sync}$ entspricht ($n_E \approx n_A$).

Hierbei berücksichtigt das erfindungsgemäße Verfahren eine in der Praxis vorhandene Abschalttotzeit $T_{TA}$ der Getriebebremse 1 zwischen der Ausgabe des Abschaltsignals ($t_{SA}$) und dem tatsächlichen Beginn des Abschaltvorgangs ($t_{Abs0}$) sowie die Tatsache, dass das Bremsmoment $M_{Br0}$ der Getriebebremse 1 und damit der Gradient der Eingangsdrehzahl $\Delta n_E / \Delta t$ nicht schlagartig auf Null reduziert werden kann, sondern während eines über einen endlichen Abschaltzeitraum $T_{Abs}$ ablaufenden Abschaltvorgangs bis auf Null abgebaut wird.

Hierzu wird zunächst der während des Abschaltvorgangs zwischen den Zeitpunkten $t_{Abs0}$ und $t_{Abs1}$ zu erwartende Drehzahlverlauf der Eingangsdrehzahl $n_E(t)$ in Abhängigkeit des zuvor konstanten Gradienten $\Delta n_E / \Delta t$ mit einer quadratischen Zeitfunktion bestimmt. Unter der Annahme eines linearen Abbaus des Bremsmomentes gemäß Fig. 2, der durch die Gleichung

$$M_{Br}(t) = M_{Br0} \left(1 - t/T_{Abs}\right)$$

beschrieben ist, ergibt sich der Drehzahlverlauf der Eingangsdrehzahl aus der Gleichung

$$n_E(t) = n_{E\_0} + \Delta n_E / \Delta t * t - 1 / (2T_{Abs}) * \Delta n_E / \Delta t * t^2$$

(zweite Gleichung von Anspruch 4), wobei mit $n_{E\_0}$ der an sich unbekannte Wert der Eingangsdrehzahl zu Beginn des Abschaltvorgangs zum Zeitpunkt $t_{Abs0}$ bezeichnet ist.

In Fig. 2 ist durch die zusätzlich eingezeichneten Zeitverläufe von zwei Bremsmomenten $M_{Br}'(t)$ und $M_{Br}''(t)$ während des Abschaltvorgangs der Getriebebremse mit unterschiedlichen Anfangsmomenten $|M_{Br0}'| < |M_{Br0}| < |M_{Br0}''|$ auch veranschaulicht, dass sich die Abschaltdauer $T_{Abs}$ bei dieser Bauart der Getriebebremse 1 proportional zur Höhe des zu Beginn des Abschaltvorgangs vorliegenden Bremsmomentes $M_{Br0}$ verhält, d.h. dass das Verhältnis des anfänglichen Bremsmomentes zur Abschaltdauer $M_{Br0} / T_{Abs}$ konstant ist ($M_{Br0}' / T_{Abs}' = M_{Br0} / T_{Abs} = M_{Br0}'' / T_{Abs}'' = $ const.).

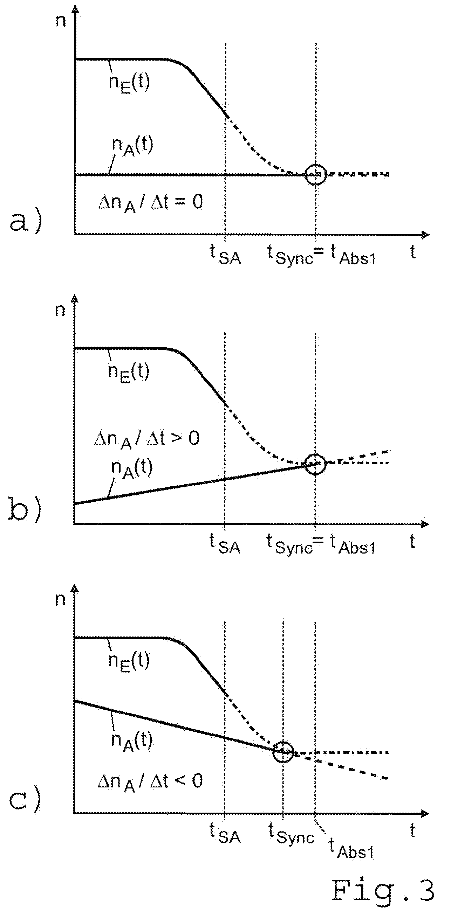

Abhängig von dem Gradienten der Ausgangsdrehzahl $\Delta n_A / \Delta t$ wird nun der optimale Zeitpunkt $t_{Sync}$ zum Erreichen der Synchrondrehzahl $n_{Sync}$ bestimmt. Wie in Fig. 3 veranschaulicht ist, kann die Ausgangsdrehzahl $n_A$ während der schaltungsbedingten Zugkraftunterbrechung abhängig von der Höhe und der Richtung des resultierenden Fahrwiderstands konstant bleiben ($\Delta n_A/\Delta t = 0$, siehe Fig. 3a), ansteigen ($\Delta n_A / \Delta t > 0$, siehe Fig. 3b), oder abfallen ($\Delta n_A / \Delta t < 0$, siehe Fig. 3c).

Bei einem Gradienten der Ausgangsdrehzahl $\Delta n_A / \Delta t \geq 0$ wird als optimaler Zeitpunkt $t_{Sync}$ zum Erreichen der Synchrondrehzahl $n_{Sync}$ derjenige Zeitpunkt angesehen, bei dem der Gradient der Eingangsdrehzahl $dn_E / dt$ den Wert Null erreicht ($dn_E / dt = 0$).

Bei einem auch in dem vorliegenden Anwendungsbeispiel gemäß Fig. 1 vorhandenen Gradienten der Ausgangsdrehzahl $\Delta n_A / \Delta t < 0$, der sich z.B. beim Befahren einer Steigungsstrecke einstellen kann, wird als optimaler Zeitpunkt $t_{Sync}$ zum Erreichen der Synchrondrehzahl $n_{Sync}$ derjenige Zeitpunkt angesehen, bei dem der Gradient der Eingangsdrehzahl $dn_E / dt$ den Gradienten der Ausgangsdrehzahl $\Delta n_A / \Delta t$ erreicht ($dn_E / dt = \Delta n_A / \Delta t$).

Demzufolge ergibt sich in dem vorliegenden Anwendungsbeispiel für die Bestimmung des Synchronzeitpunktes $t_{Sync}$ bzw. des Synchronzeitraums $T_{Sync}$ innerhalb des Abschaltvorgangs der Getriebebremse 1, d.h. ab dem Zeitpunkt $t_{Abs0}$, die Gleichung

$$T_{Sync} = T_{Abs} * \left(1 - (\Delta n_A / \Delta t) / (\Delta n_E / \Delta t)\right)$$

(zweite Gleichung von Anspruch 7), mit der sich bei einer angenommenen Abschaltdauer von $T_{Abs} = 0{,}20$ sec, einem in der Bremsphase konstanten Gradienten der Eingangsdrehzahl von $\Delta n_E / \Delta t = -50$ sec$^{-2}$, und einem als konstant ansehbaren Gradienten der Ausgangsdrehzahl von $\Delta n_A / \Delta t = -5$ sec$^{-2}$ der Zeitraum bis zum Erreichen der Synchrondrehzahl $n_{Sync}$ zu $T_{Sync} = 0{,}18$ sec ergibt. Die Synchrondrehzahl $n_{Sync}$ wird demnach in diesem Fall um 0,20 sec - 0,18 sec = 0,02 sec vor dem Ende des Abschaltvorgangs, d.h. vor dem Erreichen des Nullgradienten der Eingangsdrehzahl ($\Delta n_E / \Delta t$) = 0) zum Zeitpunkt $t_{Abs1}$ erreicht.

Mit einer aktuellen Eingangsdrehzahl von $n_{E\_akt} = 2100$ min$^{-1}$ = 35 sec$^{-1}$, einer aktuellen Ausgangsdrehzahl von $n_{A\_akt} = 1500$ min$^{-1}$ = 25 sec$^{-1}$, und einer vorab, z.B. im Rahmen der Fahrzeugentwicklung oder der Applikation des Schaltgetriebes, ermittelten Abschalttotzeit von $T_{TA} = 0{,}04$ sec wird der Zeitraum bis zur Ausgabe des Abschaltsignals $T_{SA}$ zum Öffnen des Auslassventils 15, d.h. zum Abschalten der Getriebebremse 1, in dem vorliegenden Anwendungsbeispiel mit der Gleichung

$$T_{SA} = (n_{E\_akt} - n_{A\_akt}) / ((\Delta n_A / \Delta t) - (\Delta n_E / \Delta t)) - T_{TA} -$$

$$\tfrac{1}{2} T_{Abs} * \left(1 - (\Delta n_A / \Delta t) / (\Delta n_E / \Delta t)\right)$$

(zweite Gleichung von Anspruch 9) zu $T_{SA} = 0{,}09$ sec berechnet.

Mit dem erfindungsgemäßen Verfahren wird der Zeitpunkt zur Ausgabe des Abschaltsignals $t_{SA}$ bzw. des Zeitraums bis zur Ausgabe des Abschaltsignals $T_{SA}$ unter Berücksichtigung aller Einflussfaktoren derart genau bestimmt, dass die Synchrondrehzahl $n_{Sync}$ mit hoher Genauigkeit zum Zeitpunkt $t_{Sync}$ erreicht wird, d.h. die Eingangsdrehzahl $n_E$ der Ausgangsdrehzahl $n_A$ entspricht ($n_E = n_A$).

Um bei dem nachfolgenden Einrücken der Gangkupplung des Zielgangs eine Zahn-auf-Zahn-Stellung zwischen den beiden Kupplungshälften zu vermeiden und ein selbsttätiges Lösen einer auftretenden Zahn-auf-Zahn-Stellung zu ermöglichen, kann eine erwünschte Mindestdrehzahldifferenz an der Gangkupplung durch eine um ein geringes Zeitintervall von z.B. $\Delta t_{SA}$ = 0,01 sec frühere oder spätere Ausgabe des Abschaltsignals zum Öffnen des Auslassventils 15 erzeugt werden.

Bezugszeichen

| 1 | Getriebebremse |
|---|---|
| 2 | Vorgelegewelle |
| 3 | Innenlamelle |
| 4 | Außenlamelle |
| 5 | Stirnwand |
| 6 | Bremsgehäuse |
| 7 | Zylinder |
| 8 | Kolben |
| 9 | Druckraum |
| 10 | Feder |
| 11 | Druckleitung |
| 12a, 12b | Verbindungsleitung |
| 13 | Einlassventil |
| 14 | Drucklosleitung |
| 15 | Auslassventil |
| $F_{Abs}$ | Abschaltfaktor |
| i | Ordnungszahl |
| i-1 | Ordnungszahl |
| $J_{GE}$ | Eingangsseitiges Massenträgheitsmoment |
| M | Drehmoment |
| $M_{Br}$ | Bremsmoment (allgemein, variabel) |
| $M_{Br}'$ | Bremsmoment (allgemein, variabel) |
| $M_{Br}''$ | Bremsmoment (allgemein, variabel) |
| $M_{Br0}$ | Konstantes Bremsmoment |
| $M_{Br0}'$ | Konstantes Bremsmoment |
| $M_{Br0}''$ | Konstantes Bremsmoment |
| $M_W$ | Konstantes Widerstandsmoment |
| n | Drehzahl |
| $n_A$ | Ausgangsdrehzahl |
| $n_{A\_akt}$ | Aktueller Wert der Ausgangsdrehzahl |
| $n_{A\_i}$ | Ausgangsdrehzahl zum Zeitpunkt $t_i$ |
| $n_{A\_i-1}$ | Ausgangsdrehzahl zum Zeitpunkt $t_{i-1}$ |
| $n_E$ | Eingangsdrehzahl |
| $n_{E\_0}$ | Eingangsdrehzahl zum Zeitpunkt $t_{Abs0}$ |
| $n_{E\_akt}$ | Aktueller Wert der Eingangsdrehzahl |
| $n_{E\_i}$ | Eingangsdrehzahl zum Zeitpunkt $t_i$ |
| $n_{E\_i-1}$ | Eingangsdrehzahl zum Zeitpunkt $t_{i-1}$ |
| t | Zeit, Zeitpunkt |
| $t_{Abs0}$ | Beginn des Abschaltvorgangs |
| $t_{Abs1}$ | Ende des Abschaltvorgangs |
| $t_{akt}$ | Aktueller Zeitpunkt |
| $t_{Ein0}$ | Beginn des Einschaltvorgangs |
| $t_{Ein1}$ | Ende des Einschaltvorgangs |
| $t_i$ | bestimmter Zeitpunkt |
| $t_{i-1}$ | vorhergehender Zeitpunkt |
| $t_{SA}$ | Abschaltsignalzeitpunkt |
| $t_{SE1}$ | Erster Einschaltsignalzeitpunkt |
| $t_{SE2}$ | Zweiter Einschaltsignalzeitpunkt |
| $t_{Sync}$ | Synchronzeitpunkt |

| $T$ | Zeit, Zeitraum, Zeitspanne |
|---|---|
| $T_{Abs}$ | Abschaltdauer |
| $T_{Abs}'$ | Abschaltdauer |
| $T_{Abs}''$ | Abschaltdauer |
| $T_{SA}$ | Abschaltsignalzeitraum |
| $T_{Sync}$ | Synchronzeitraum |
| $T_{TA}$ | Abschalttotzeit |
| $T_{TE1}$ | Erste Einschalttotzeit |
| $T_{TE2}$ | Zweite Einschalttotzeit |
| $U$ | Elektrische Spannung |
| $U_{VA}$ | Steuerspannung von 15 |
| $U_{VE}$ | Steuerspannung von 13 |

| $\Delta n_A/\Delta t$ | Konstanter Gradient der Ausgangsdrehzahl |
|---|---|
| $dn_E/dt$ | Variabler Gradient der Eingangsdrehzahl |
| $\Delta n_E/\Delta t$ | Konstanter Gradient der Eingangsdrehzahl (gesamt) |
| $(\Delta n_E/\Delta t)_{Br}$ | Konstanter Gradient der Eingangsdrehzahl (erzeugt von der Getriebebremse) |
| $(\Delta n_E/\Delta t)_W$ | Konstanter Gradient der Eingangsdrehzahl (erzeugt von einem resultierenden Widerstandsmoment) |
| $\Delta t_{SA}$ | Zeitintervall |

**Patentansprüche**

1. Verfahren zur Steuerung einer Getriebebremse eines in Vorgelegebauweise ausgeführten und mit Klauenkupplungen versehenen automatisierten Schaltgetriebes, die mit einer eingangsseitigen Getriebewelle (2) in Wirkverbindung steht und mittels eines Einlassventils (13) und eines Auslassventils (15), die jeweils als ein 2/2-Wege-Magnetschaltventil ausgebildet sind, hydraulisch oder pneumatisch betätigbar ist, wobei bei einer Hochschaltung von einem Lastgang in einen Zielgang nach dem Auslegen des Lastgangs zur Synchronisierung des Zielgangs zunächst das Einlassventil (13) geöffnet und das Auslassventil (15) geschlossen wird, nach dem Einstellen eines Bremsmomentes ($M_{Br0}$) das Einlassventil (13) geschlossen wird, und während des Abbremsens der eingangsseitigen Getriebewelle (2) der Zeitraum bis zur Ausgabe eines Abschaltsignals ($T_{SA}$) zum Öffnen des Auslassventils (15) in Abhängigkeit einer Eingangsdrehzahl ($n_E$) und deren Gradient ($\Delta n_E / \Delta t$) sowie einer Ausgangsdrehzahl ($n_A$) und deren Gradient ($\Delta n_A / \Delta t$) derart bestimmt wird, dass die Eingangsdrehzahl ($n_E$) nach dem Abschalten der Getriebebremse (1) weitgehend einer vorgegebenen Synchrondrehzahl entspricht ($n_E \approx n_A$), **dadurch gekennzeichnet, dass** die aktuelle Eingangsdrehzahl ($n_{E\_akt}$) und die aktuelle Ausgangsdrehzahl ($n_{A\_akt}$) sensorisch erfasst und daraus jeweils die Gradienten der Eingangsdrehzahl ($\Delta n_E / \Delta t$) und der Ausgangsdrehzahl ($\Delta n_A / \Delta t$) berechnet werden, dass der Drehzahlverlauf der Eingangsdrehzahl ($n_E(t)$) während des bevorstehenden Abschaltvorgangs der Getriebebremse (1) in Abhängigkeit des Gradienten der Eingangsdrehzahl ($\Delta n_E / \Delta t$) mittels einer quadratischen Zeitfunktion bestimmt wird, dass der optimale Zeitpunkt ($t_{Sync}$) zum Erreichen der Synchrondrehzahl ($n_{Sync}$) während des Abschaltvorgangs der Getriebebremse (1) mittels des Drehzahlverlaufs der Eingangsdrehzahl ($n_E(t)$) in Abhängigkeit des Gradienten der Ausgangsdrehzahl ($\Delta n_A / \Delta t$) bestimmt wird, und dass der Zeitraum ($T_{SA}$) bis zur Ausgabe des Abschaltsignals in Abhängigkeit der aktuellen Eingangsdrehzahl ($n_{E\_akt}$) und deren Gradient ($\Delta n_E / \Delta t$) sowie der aktuellen Ausgangsdrehzahl ($n_{A\_akt}$) und deren Gradient ($\Delta n_A / \Delta t$) durch eine Rückrechnung von dem Zeitpunkt ($t_{Sync}$) des Erreichens der Synchrondrehzahl ($n_{Sync}$) unter Berücksichtigung einer Abschalttotzeit ($T_{TA}$) der Getriebebremse (1) zwischen der Ausgabe des Abschaltsignals ($t_{SA}$) und dem Beginn des Abschaltvorgangs ($t_{Abs0}$) ermittelt wird.

2. Verfahren nach Anspruch 1, **dadurch gekennzeichnet, dass** der Gradient der Eingangsdrehzahl ($\Delta n_E / \Delta t$) bis zum Beginn des Abschaltvorgangs ($t_{Abs0}$) und der Gradient der Ausgangsdrehzahl ($\Delta n_A / \Delta t$) bis zum Erreichen der Synchrondrehzahl ($n_{Sync}$) jeweils als konstant angenommen und als Differenzenquotient aus zwei aktuell aufeinanderfolgend erfassten Drehzahlwerten ($n_{E\_i}$, $n_{E\_i-1}$; $n_{A\_i}$, $n_{A\_i-1}$) und der Zeitspanne zwischen der Erfassung der Drehzahlwerte ($t_i - t_{i-1}$) berechnet werden ($\Delta n_E / \Delta t = (n_{E\_i} - n_{E\_i-1}) / (t_i - t_{i-1})$,

$$\Delta n_A / \Delta t = (n_{A\_i} - n_{A\_i-1}) / (t_i - t_{i-1})).$$

3. Verfahren nach Anspruch 1 oder 2, **dadurch gekennzeichnet, dass** der Drehzahlverlauf der Eingangsdrehzahl ($n_E(t)$) während des Abschaltvorgangs der Getriebebremse mit der Zeitfunktion $n_E(t) = n_{E\_0} + \Delta n_E / \Delta t * t + F_{Abs} *$

$t^2$ ermittelt wird, wobei mit $n_{E\_0}$ die Eingangsdrehzahl zu Beginn des Abschaltvorgangs ($t_{Abs0}$) und mit $F_{Abs}$ ein vorab bestimmter, für den Zeitverlauf des Abschaltvorgangs der Getriebebremse (1) charakteristischer Abschaltfaktor bezeichnet sind.

4. Verfahren nach Anspruch 1 oder 2, **dadurch gekennzeichnet, dass** der Drehzahlverlauf der Eingangsdrehzahl ($n_E(t)$) während des Abschaltvorgangs der Getriebebremse (1) mit der Zeitfunktion

$$n_E(t) = n_{E\_0} + (M_{Br0} + M_W) / (J_{GE} * 2\pi) * t - M_{Br0} / (J_{GE} * 4\pi * T_{Abs}) * t^2$$

oder mit der Zeitfunktion

$$n_E(t) = n_{E\_0} + \Delta n_E / \Delta t * t - 1 / (2 T_{Abs}) * (\Delta n_E / \Delta t)_{Br} * t^2$$

ermittelt wird, wobei mit $M_{Br0}$ das Bremsmoment der Getriebebremse (1) zu Beginn des Abschaltvorgangs ($t_{Abs0}$), mit $M_W$ ein während des Hochschaltvorgangs auf die Eingangswelle des Schaltgetriebes wirksames Widerstandsmoment, mit $J_{GE}$ das Massenträgheitsmoment der rotierenden Bauteile des eingangsseitigen Teils des Schaltgetriebes, mit $T_{Abs}$ die Abschaltdauer der Getriebebremse (1) unter Annahme eines linearen Abbaus des Bremsmomentes ($M_{Br}(t) = M_{Br0} (1 - t/T_{Abs})$), und mit $(\Delta n_E / \Delta t)_{Br}$ der auf das Bremsmoment $M_{Br0}$ der Getriebebremse (1) zurückzuführende Gradient der Eingangsdrehzahl bezeichnet sind.

5. Verfahren nach einem der Ansprüche 1 bis 4, **dadurch gekennzeichnet, dass** der optimale Zeitpunkt ($t_{Sync}$) zum Erreichen der Synchrondrehzahl ($n_{Sync}$) bei einem Gradienten der Ausgangsdrehzahl größer oder gleich einem auf ein resultierendes Widerstandsmoment $M_W$ zurückzuführenden Gradienten der Eingangsdrehzahl ($\Delta n_A / \Delta t \geq (\Delta n_E / \Delta t)_W$) als derjenige Zeitpunkt $t_{Sync}$ bestimmt wird, bei dem der Gradient der Eingangsdrehzahl $dn_E / dt$ den Wert dieses Gradienten $(\Delta n_E / \Delta t)_W$ erreicht ($dn_E / dt = (\Delta n_E / \Delta t)_W$), und bei einem Gradienten der Ausgangsdrehzahl kleiner dem auf das Widerstandsmoment $M_W$ zurückzuführenden Gradienten der Eingangsdrehzahl ($\Delta n_A / \Delta t < (\Delta n_E / \Delta t)_W$) als derjenige Zeitpunkt $t_{Sync}$ bestimmt wird, bei dem der Gradient der Eingangsdrehzahl $dn_E / dt$ den Wert des Gradienten der Ausgangsdrehzahl $\Delta n_A / \Delta t$ erreicht ($dn_E / dt = \Delta n_A / \Delta t$).

6. Verfahren nach Anspruch 3 und 5, **dadurch gekennzeichnet, dass** der optimale Zeitpunkt $t_{Sync}$ zum Erreichen der Synchrondrehzahl ($n_{Sync}$) bei einem Gradienten der Ausgangsdrehzahl $\Delta n_A / \Delta t \geq (\Delta n_E / \Delta t)_W$ mit der Gleichung $t_{Sync} = -1 / 2 F_{Abs} * (\Delta n_E / \Delta t)_{Br}$ und bei einem Gradienten der Ausgangsdrehzahl $\Delta n_A / \Delta t < (\Delta n_E / \Delta t)_W$ mit der Gleichung $t_{Sync} = 1 / 2 F_{Abs} * (\Delta n_A / \Delta t - \Delta n_E / \Delta t)$ berechnet wird.

7. Verfahren nach Anspruch 4 und 5, **dadurch gekennzeichnet, dass** der optimale Zeitpunkt $t_{Sync}$ zum Erreichen der Synchrondrehzahl ($n_{Sync}$) bei einem Gradienten der Ausgangsdrehzahl $\Delta n_A / \Delta t \geq (\Delta n_E / \Delta t)_W$ mit der Gleichung $t_{Sync} = T_{Abs}$ und bei einem Gradienten der Ausgangsdrehzahl $\Delta n_A / \Delta t < (\Delta n_E / \Delta t)_W$ mit der Gleichung $t_{Sync} = T_{Abs} * (1 + ((\Delta n_E / \Delta t)_W - (\Delta n_A / \Delta t)) / (\Delta n_E / \Delta t)_{Br})$ berechnet wird.

8. Verfahren nach den Ansprüchen 3, 5 und 6, **dadurch gekennzeichnet, dass** der Zeitraum bis zur Ausgabe des Abschaltsignals $T_{SA}$ zum Öffnen des Auslassventils (15) bei einem Gradienten der Ausgangsdrehzahl $\Delta n_A / \Delta t \geq (\Delta n_E / \Delta t)_W$ mit der Gleichung

$$T_{SA} = (n_{E\_akt} - n_{A\_akt}) / ((\Delta n_A / \Delta t) - (\Delta n_E / \Delta t)) - T_{TA} +$$

$$1/ 2 F_{Abs} * (\Delta n_E / \Delta t)_{Br} * (1 + \tfrac{1}{2} (\Delta n_E / \Delta t)_{Br} / ((\Delta n_A / \Delta t) - (\Delta n_E / \Delta t)))$$

und bei einem Gradienten der Ausgangsdrehzahl $\Delta n_A / \Delta t < (\Delta n_E / \Delta t)_W$ mit der Gleichung

$$T_{SA} = (n_{E\_akt} - n_{A\_akt}) / ((\Delta n_A / \Delta t) - (\Delta n_E / \Delta t)) - T_{TA} -$$

$$1/ 4 F_{Abs} * ((\Delta n_A / \Delta t) - (\Delta n_E / \Delta t))$$

berechnet wird.

9. Verfahren nach den Ansprüchen 4, 5 und 7, **dadurch gekennzeichnet, dass** der Zeitraum bis zur Ausgabe des Abschaltsignals $T_{SA}$ zum Öffnen des Auslassventils (15) bei einem Gradienten der Ausgangsdrehzahl $\Delta n_A / \Delta t \geq (\Delta n_E / \Delta t)_W$ mit der Gleichung

$$T_{SA} = (n_{E\_akt} - n_{A\_akt}) / ((\Delta n_A / \Delta t) - (\Delta n_E / \Delta t)) - T_{TA} -$$

$$T_{Abs} * (1 + \tfrac{1}{2} (\Delta n_E / \Delta t)_{Br} / ((\Delta n_A / \Delta t) - (\Delta n_E / \Delta t)))$$

und bei einem Gradienten der Ausgangsdrehzahl $\Delta n_A / \Delta t < (\Delta n_E / \Delta t)_W$ mit der Gleichung

$$T_{SA} = (n_{E\_akt} - n_{A\_akt}) / ((\Delta n_A / \Delta t) - (\Delta n_E / \Delta t)) - T_{TA} -$$

$$\tfrac{1}{2} T_{Abs} * (1 + ((\Delta n_E / \Delta t)_W - (\Delta n_A / \Delta t)) / (\Delta n_E / \Delta t)_{Br})$$

berechnet wird.

10. Verfahren nach einem der Ansprüche 3 bis 9, **dadurch gekennzeichnet, dass** der Zeitraum bis zur Ausgabe des Abschaltsignals ($T_{SA}$) zum Öffnen des Auslassventils (15) bei einem absolut extrem niedrigen Gradienten der Ausgangsdrehzahl ($|\Delta n_A / \Delta t| \ll |\Delta n_E / \Delta t|$ und/oder $\Delta n_A / \Delta t \approx 0$) und bei einem zugleich vernachlässigbar kleinen Widerstandsmoment Mw (($\Delta n_E / \Delta t)_W = 0$; $\Delta n_E / \Delta t = (\Delta n_E / \Delta t)_{Br}$) mit der Gleichung

$$T_{SA} = (n_{A\_akt} - n_{E\_akt}) / (\Delta n_E / \Delta t) - T_{TA} + 1/4 F_{Abs} * (\Delta n_E / \Delta t)$$

oder mit der Gleichung

$$T_{SA} = (n_{A\_akt} - n_{E\_akt}) / (\Delta n_E / \Delta t) - T_{TA} - \tfrac{1}{2} T_{Abs}$$

berechnet wird.

11. Verfahren nach einem der Ansprüche 1 bis 10, **dadurch gekennzeichnet, dass** der auf das Widerstandsmoment ($M_W$) zurückzuführende Gradient der Eingangsdrehzahl ($\Delta n_E / \Delta t)_W$ nach dem Auslegen des Lastgangs und vor dem Einsetzen der Bremswirkung der Getriebebremse (1) ermittelt wird.

12. Verfahren nach Anspruch 11, **dadurch gekennzeichnet, dass** der auf das Widerstandsmoment ($M_W$) zurückzuführende Gradient der Eingangsdrehzahl ($\Delta n_E / \Delta t)_W$ nach dem Auslegen des Lastgangs und unmittelbar nach dem Öffnen des Einlassventils (13) sowie dem Schließen des Auslassventils (15) ermittelt wird.

13. Verfahren nach einem der Ansprüche 1 bis 12, **dadurch gekennzeichnet, dass** die Abschalttotzeit $T_{TA}$ und/oder der Abschaltfaktor $F_{Abs}$ und/oder die Abschaltdauer $T_{Abs}$ der Getriebebremse (1) vorab in Abhängigkeit mindestens eines relevanten Betriebsparameters ermittelt und entsprechend parametriert in einem Datenspeicher eines Getriebesteuergerätes des Schaltgetriebes abgelegt werden.

14. Verfahren nach Anspruch 13, **dadurch gekennzeichnet, dass** zumindest die Betriebstemperatur der Getriebebremse (1) oder ersatzweise die Betriebstemperatur des Schaltgetriebes als relevanter Betriebsparameter verwendet und zu Beginn einer Hochschaltung sensorisch erfasst wird, und dass bei der Bestimmung des Drehzahlverlaufs der Eingangsdrehzahl $n_E(t)$ während des Abschaltvorgangs, des optimalen Zeitpunkts $t_{Sync}$ zum Erreichen der Synchrondrehzahl ($n_{Sync}$), und des Zeitraums bis zur Ausgabe des Abschaltsignals $T_{SA}$ zum Öffnen des Auslassventils (15) jeweils der dem erfassten Temperaturwert parametrisch nächstgelegene abgespeicherte Wert oder ein mittels des erfassten Temperaturwertes aus abgespeicherten Werten interpolierter Wert der Abschalttotzeit $T_{TA}$ und/oder des Abschaltfaktors $F_{Abs}$ und/oder der Abschaltdauer $T_{Abs}$ der Getriebebremse (1) verwendet wird.

**Claims**

1. Method for controlling a transmission brake of an automated manual transmission which is embodied with a layshaft design, is provided with dog clutches, is operatively connected to an input-side transmission shaft (2) and can be actuated hydraulically or pneumatically by means of an inlet valve (13) and an outlet valve (15) which are each embodied as a 2/2-way solenoid switching valve, wherein in the case of shifting up from a load gear into a target gear after the disengagement of the load gear in order to synchronize the target gear the inlet valve (13) is firstly opened and the outlet valve (15) is closed, after the setting of a braking torque ($M_{Br0}$) the inlet valve (13) is closed, and during the braking of the input-side transmission shaft (2) the period up to the outputting of a switch-off signal ($T_{SA}$) for opening the outlet valve (15) is determined as a function of an input rotational speed ($n_E$) and the gradient ($\Delta n_E/\Delta t$) thereof and an output rotational speed ($n_A$) and the gradient ($\Delta n_A/\Delta t$) thereof in such a way that after the switching off of the transmission brake (1) the input rotational speed ($n_E$) largely corresponds to a predefined synchronizing rotational speed ($n_E \approx n_A$), **characterized in that** the current input rotational speed ($n_{E\_curr}$) and the current output rotational speed ($n_{A\_curr}$) are detected by sensor and the gradients of the input rotational speed ($\Delta n_E/\Delta t$) and of the output rotational speed ($\Delta n_A/\Delta t$) are respectively calculated therefrom, **in that** the rotational speed profile of the input rotational speed ($n_E(t)$) during the imminent switch-off process of the transmission brake (1) is determined as a function of the gradient of the input rotational speed ($\Delta n_E/\Delta t$) by means of a quadratic time function, **in that** the optimum time ($t_{Sync}$) to reach the synchronizing rotational speed ($n_{Sync}$) during the switch-off process of the transmission brake (1) is determined by means of the rotational speed profile of the input rotational speed ($n_E(t)$) as a function of the gradient of the output rotational speed ($\Delta n_A/\Delta t$), and **in that** the period ($T_{SA}$) up to the outputting of the switch-off signal is obtained as a function of the current input rotational speed ($n_{E\_curr}$) and the gradient ($\Delta n_E/\Delta t$) thereof as well as of the current output rotational speed ($n_{A\_curr}$) and the gradient ($\Delta n_A/\Delta t$) thereof by means of back-calculation from the time ($t_{sync}$) when the synchronizing rotational speed ($n_{sync}$) is reached, while taking into account a switch-off delay time ($T_{TA}$) of the transmission brake (1) between the outputting of the switch-off signal ($t_{SA}$) and the start of the switching- off process ($t_{Abs0}$).

2. Method according to Claim 1, **characterized in that** the gradient of the input rotational speed ($\Delta n_E/\Delta t$) up to the start of the switch-off process ($t_{Abs0}$) and the gradient of the output rotational speed ($\Delta n_A/\Delta t$) up to the reaching of the synchronizing rotational speed ($n_{sync}$) are each assumed to be constant and are calculated as a differential quotient of two current successively detected rotational speed values ($n_{E\_i}$, $n_{E\_i-1}$; $n_{A\_i}$, $n_{A\_i-1}$) and the time period between the detection of the rotational speed values ($t_i$-$t_{i-1}$) ($\Delta n_E/\Delta t = (n_{E\_i}-n_{E\_i-1})/(t_i-t_{i-1})$, $\Delta n_A/\Delta t=(n_{A\_i}-n_{A\_i-1})/(t_i-t_{i-1})$).

3. Method according to Claim 1 or 2, **characterized in that** the rotational speed profile of the input rotational speed ($n_E(t)$) during the switch-off process of the transmission brake is obtained with the time function $n_E(t)=n_{E\_0}+\Delta nE/\Delta t*t+F_{Abs}*t^2$, wherein $n_{E\_0}$ denotes the input rotational speed at the start of the switch-off process ($t_{Abs0}$), and $F_{Abs}$ denotes a predetermined switch-off factor which is characteristic of the time profile of the switch-off process of the transmission brake (1).

4. Method according to Claim 1 or 2, **characterized in that** the rotational speed profile of the input rotational speed ($n_E(t)$) during the switch-off process of the transmission brake (1) is obtained with the time function

$$n_E(t)=n_{E\_0}+(M_{Br0}+M_W)/(J_{GE}*2\pi)*t-M_{Br0}/(J_{GE}*4\pi*T_{Abs})*t^2$$

or with the time function

$$n_E(t)=n_{E\_0}+\Delta n_E/\Delta t*t-1/(2T_{Abs})*(\Delta n_E/\Delta t)_{Br}*t^2,$$

wherein $M_{Br0}$ denotes the braking torque of the transmission brake (1) at the start of the switch-off process ($t_{Abs0}$), $M_W$ denotes a resistance torque which is effective on the input shaft of the manual transmission during the shift-up process, $J_{GE}$ denotes the moment of mass inertia of the rotating components of the input-side part of the manual transmission, $T_{Abs}$ denotes the switch-off period of the transmission brake (1) assuming a linear reduction in the braking torque ($M_{Br}(t)=M_{Br0}(1-t/T_{Abs})$), and $(\Delta n_E/\Delta t)_{Br}$ denotes the gradient of the input rotational speed which is attributable to the braking torque $M_{Br0}$ of the transmission brake (1).

5. Method according to one of Claims 1 to 4, **characterized in that**, given a gradient of the output rotational speed which is greater than or equal to a gradient of the input rotational speed ($\Delta n_A/\Delta t \geq (\Delta n_E/\Delta t)_W$) which is attributable to a resulting resistance torque $M_W$, the optimum time ($t_{Sync}$) to reach the synchronizing rotational speed ($n_{Sync}$) is determined as that time $t_{Sync}$ at which the gradient of the input rotational speed $dn_E/dt$ reaches the value of this gradient ($\Delta n_E/\Delta t)_W$, ($dn_E/dt=(\Delta n_E/\Delta t)_W$), and given a gradient of the output rotational speed which is less than the gradient of the input rotational speed ($\Delta n_A/\Delta t<(\Delta n_E/\Delta t)_W$) which is attributable to the resistance torque $M_W$, said optimum time ($t_{Sync}$) is determined as the time $t_{Sync}$ at which the gradient of the input rotational speed $dn_E/dt$ reaches the value of the gradient of the output rotational speed $\Delta n_A/\Delta t$, ($dn_E/dt=\Delta n_A/\Delta t$).

**6.** Method according to Claims 3 and 5, **characterized in that** the optimum time $t_{Sync}$ to reach the synchronizing rotational speed ($n_{Sync}$) given a gradient of the output rotational speed $\Delta n_A/\Delta t \geq (\Delta n_E/\Delta t)_W$ is calculated with the equation $t_{Sync}=-1/2F_{Abs}^* (\Delta n_E/\Delta t)_{Br}$, and given a gradient of the output rotational speed $\Delta n_A/\Delta t<(\Delta n_E/\Delta t)_W$ said optimum time $t_{Sync}$ is calculated with the equation

$$t_{Sync}=1/2F_{Abs}^* (\Delta n_A/\Delta t - \Delta n_E/\Delta t).$$

**7.** Method according to Claims 4 and 5, **characterized in that** the optimum time $t_{Sync}$ to reach the synchronizing rotational speed ($n_{Sync}$) given a gradient of the output rotational speed $\Delta n_A/\Delta t \geq (\Delta n_E/\Delta t)_W$ is calculated with the equation $t_{Sync} = T_{Abs}$, and given a gradient of the output rotational speed $\Delta n_A/\Delta t<(\Delta n_E/\Delta t)_W$ said optimum time $t_{Sync}$ is calculated with the equation $t_{Sync} = T_{Abs}^* (1+((\Delta n_E/\Delta t)_W-(\Delta n_A/\Delta t))/(\Delta n_E/\Delta t)_{Br})$.

**8.** Method according to Claims 3, 5 and 6, **characterized in that** given a gradient of the output rotational speed $\Delta n_A/\Delta t \geq (\Delta n_E/\Delta t)_W$, the period up to the outputting of the switch-off signal $T_{SA}$ for opening the outlet valve (15) is calculated with the equation

$$T_{SA}=(n_{E\_curr}-n_{A\_curr})/((\Delta n_A/\Delta t)-(\Delta n_E/\Delta t))-T_{TA}+$$
$$1/2F_{Abs}^* (\Delta n_E/\Delta t)_{Br}^* (1+\tfrac{1}{2}(\Delta n_E/\Delta t)_{Br}/((\Delta n_A/\Delta t)-(\Delta n_E/\Delta t))),$$

and given a gradient of the output rotational speed $\Delta n_A/\Delta t<(\Delta n_E/\Delta t)_W$ said period is calculated with the equation

$$T_{SA}=(n_{E\_curr}-n_{A\_curr})/((\Delta n_A/\Delta t)-(\Delta n_E/\Delta t))-T_{TA}-$$
$$1/4F_{Abs}^* ((\Delta n_A/\Delta t)-(\Delta n_E/\Delta t)).$$

**9.** Method according to Claims 4, 5 and 7, **characterized in that** given a gradient of the output rotational speed $\Delta n_A/\Delta t \geq (\Delta n_E/\Delta t)_W$, the period up to the outputting of the switch-off signal $T_{SA}$ for opening the outlet valve (15) is calculated with the equation

$$T_{SA}=(n_{E\_curr}-n_{A\_curr})/((\Delta n_A/\Delta t)-(\Delta n_E/\Delta t))-T_{TA}-$$
$$T_{Abs}^* (1+\tfrac{1}{2}(\Delta n_E/\Delta t)_{Br}/((\Delta n_A/\Delta t)-(\Delta n_E/\Delta t))),$$

and given a gradient of the output rotational speed $\Delta n_A/\Delta t<(\Delta n_E/\Delta t)_W$ said period is calculated with the equation

$$T_{SA}=(n_{E\_curr}-n_{A\_curr})/((\Delta n_A/\Delta t)-(\Delta n_E/\Delta t))-T_{TA}-$$
$$\tfrac{1}{2}T_{Abs}^* (1+((\Delta n_E/\Delta t)_W-(\Delta n_A/\Delta t))/(\Delta n_E/\Delta t)_{Br}).$$

**10.** Method according to one of Claims 3 to 9, **characterized in that** given an absolutely extremely low gradient of the output rotational speed ($|\Delta n_A/\Delta t|<<|\Delta n_E/\Delta t|$ and/or $\Delta n_A/\Delta t \approx 0$) and given at the same time a negligible small resistance torque $M_W((\Delta n_E/\Delta t)_W=0; \Delta n_E/\Delta t=(\Delta n_E/\Delta t)_{Br})$, the period up to the outputting of the switch-off signal ($T_{SA}$) for opening the output valve (15) is calculated with the equation

$$T_{SA}=(n_{A\_curr}-n_{E\_curr})/(\Delta n_E/\Delta t)-T_{TA}+1/4F_{Abs}^* (\Delta n_E/\Delta t)$$

or with the equation

$$T_{SA} = (n_{A\_curr} - n_{E\_curr}) / (\Delta n_E / \Delta t) - T_{TA} - \tfrac{1}{2} T_{Abs}.$$

**11.** Method according to one of Claims 1 to 10, **characterized in that** the gradient of the input rotational speed $(\Delta n_E/\Delta t)_W$ which is attributable to the resistance torque $(M_W)$ is obtained after the disengagement of the load gear and before the commencement of the braking effect of the transmission brake (1).

**12.** Method according to Claim 11, **characterized in that** the gradient of the input rotational speed $(\Delta n_E/\Delta t)_W$ which is attributable to the resistance torque $(M_W)$ is obtained after the disengagement of the load gear and directly after the opening of the inlet valve (13) and the closing of the outlet valve (15).

**13.** Method according to one of Claims 1 to 12, **characterized in that** the switch-off delay time $T_{TA}$ and/or the switch-off factor $F_{Abs}$ and/or the switch-off period $T_{Abs}$ of the transmission gear (1) is obtained in advance as a function of at least one relevant operating parameter and is stored, after being correspondingly parameterized, in a data memory of a transmission control unit of the manual transmission.

**14.** Method according to Claim 13, **characterized in that** at least the operating temperature of the transmission brake (1) or alternatively the operating temperature of the manual transmission is used as a relevant operating parameter and is detected by sensor at the start of the shifting-up process, and **in that** when the rotational speed profile of the input rotational speed $n_E(t)$ is determined during the switch-off process, the optimum time $t_{Sync}$ to reach the synchronizing rotational speed $(n_{Sync})$, and the period up to the outputting of the switch-off signal $T_{SA}$ for opening the outlet valve (15), the stored value which is closest parametrically to the detected temperature value or a value of the switch-off delay time $T_{TA}$ and/or of the switch-off factor $F_{Abs}$ and/or of the switch-off period $T_{Abs}$ of the transmission brake (1) which is interpolated on the basis of stored values by means of the detected temperature value is respectively used.

**Revendications**

**1.** Procédé de commande d'un frein de transmission d'une boîte de vitesse automatique réalisée sous la forme d'une transmission de renvoi et muni d'embrayages à griffes, lequel frein de transmission est en relation fonctionnelle avec un arbre de transmission d'entrée (2) et peut être actionné au moyen d'une soupape d'entrée (13) et d'une soupape de sortie (15) qui sont respectivement réalisées sous la forme d'une électrovanne à 2/2 voies de manière hydraulique ou pneumatique, dans lequel, lors d'un changement de vitesse montant d'une vitesse inférieure à une vitesse cible, après le débrayage de la vitesse inférieure, en premier lieu, la soupape d'entrée (13) est ouverte et la soupape de sortie (15) est fermée pour synchroniser la vitesse cible, après le réglage d'un couple de freinage $(M_{Br0})$, la soupape d'entrée (13) est fermée et, pendant le freinage de l'arbre de transmission d'entrée (2), l'intervalle de temps s'écoulant jusqu'à l'émission d'un signal de désactivation $(T_{SA})$ permettant d'ouvrir la soupape de sortie (15) est déterminé en fonction d'un régime d'entrée $(n_E)$ et de son gradient $(\Delta n_E/\Delta t)$ ainsi que d'un régime de sortie $(n_A)$ et de son gradient $(\Delta n_A/\Delta t)$ de manière à ce que le régime d'entrée $(n_E)$ corresponde sensiblement à un régime synchrone prédéterminé $(n_E \approx n_A)$ après la désactivation du frein de transmission (1), **caractérisé en ce que** le régime d'entrée actuel $(n_{E\_akt})$ et le régime de sortie actuel $(n_{A\_akt})$ sont détectés par des capteurs et **en ce que** les gradients respectifs du régime d'entrée $(\Delta n_E/\Delta t)$ et du régime de sortie $(\Delta n_A/\Delta t)$ sont calculés, **en ce que** la courbe de régime du régime d'entrée $(n_E(t))$ pendant l'opération de désactivation imminente du frein de transmission (1) est déterminée en fonction des gradients du régime d'entrée $(\Delta n_E/\Delta t)$ au moyen d'une fonction temporelle quadratique, **en ce que** l'instant optimal $(t_{Sync})$ pour l'obtention du régime synchrone $(n_{Sync})$ pendant l'opération de désactivation du frein de transmission (1) est déterminé au moyen de la courbe de régime du régime d'entrée $(n_E(t))$ en fonction des gradients du régime de sortie $(\Delta n_A/\Delta t)$, et **en ce que** l'intervalle de temps $(T_{SA})$ jusqu'à l'émission du signal de désactivation est déterminé en fonction du régime d'entrée actuel $(n_{E\_akt})$ et de son gradient $(\Delta n_E/\Delta t)$ ainsi que du régime de sortie $(n_{A\_akt})$ et de son gradient $(\Delta n_A/\Delta t)$ par un calcul rétroactif de l'instant $(t_{Sync})$ de l'obtention du régime synchrone $(n_{Sync})$ en tenant compte d'un temps mort de désactivation $(T_{TA})$ du frein de transmission (1) entre l'émission du signal de désactivation $(t_{SA})$ et le début de l'opération de désactivation $(T_{Abs0})$.

**2.** Procédé selon la revendication 1, **caractérisé en ce que** le gradient du régime d'entrée $(\Delta n_E/\Delta t)$ jusqu'au début de l'opération de désactivation $(t_{Abs0})$ et le gradient du régime de sortie $(\Delta n_A/\Delta t)$ jusqu'à l'obtention du régime synchrone

($n_{Sync}$) sont respectivement considérés comme constants et **en ce qu'**ils sont calculés en tant que quotient de différences de deux valeurs de régime actuelles détectées l'une après l'autre ($n_{E\_i}$, $n_{E\_i-1}$ ; $n_{A\_i}$, $n_{A\_i-1}$) et la période de temps entre la détection des valeurs de régime ($t_i - t_{i-1}$) ($\Delta n_E/\Delta t = (n_{E\_i} - n_{E\_i-1})/(t_i - t_{i-1})$, $\Delta n_A/\Delta t = (n_{A\_i} - n_{A\_i-1})/(t_i - t_{i-1})$).

3.  Procédé selon la revendication 1 ou 2, **caractérisé en ce que** la courbe de régime du régime d'entrée ($n_E(t)$) pendant l'opération de désactivation du frein de transmission est déterminée au moyen de la fonction temporelle $n_E(t) = n_{E\_0} + \Delta n_E / \Delta t \cdot t + F_{Abs} \cdot t^2$, dans lequel le régime d'entrée au début de l'opération de désactivation ($t_{Abs0}$) est désigné par $n_{E\_0}$ et un facteur de désactivation caractéristique déterminé au préalable pour la courbe temporelle de l'opération de désactivation du frein de transmission (1) est désigné par $F_{Abs}$.

4.  Procédé selon la revendication 1 ou 2, **caractérisé en ce que** la courbe de régime du régime d'entrée ($n_E(t)$) pendant l'opération de désactivation du frein de transmission (1) est déterminée par la fonction temporelle

$$n_E(t) = n_{E\_0} + (M_{Br0} + M_W) / (J_{GE} * 2\pi) * t - M_{Br0}/(J_{GE} * 4\pi * T_{Abs}) * t^2$$

ou par la fonction temporelle

$$n_E(t) = n_{E\_0} + \Delta n_E / \Delta t * t - 1/(2 T_{Abs}) * (\Delta n_E/\Delta t)_{Br} * t^2,$$

dans lequel le couple de freinage du frein de transmission (1) au début de l'opération de désactivation ($t_{Abs0}$) est désigné par $M_{Br0}$, le couple résistant agissant sur l'arbre d'entrée de la boîte de vitesse pendant l'opération de changement de vitesse montant est désigné par $M_W$, le moment d'inertie des éléments tournants de la partie d'entrée de la boîte de vitesse est désigné par $J_{GE}$, la durée de désactivation du frein de transmission (1), en supposant une décroissance linéaire du couple de freinage ($M_{Br}(t) = M_{Br0}(1 - t/T_{Abs})$), est désignée par $T_{Abs}$, et le gradient du régime d'entrée dû au couple de freinage $M_{Br0}$ du frein de transmission (1) est désigné par $(\Delta n_E/\Delta t)_{Br}$.

5.  Procédé selon l'une quelconque des revendications 1 à 4, **caractérisé en ce que** l'instant optimal ($t_{Sync}$) pour l'obtention du régime synchrone ($n_{Sync}$), pour un gradient du régime de sortie supérieur ou égal à un gradient du régime d'entrée ($\Delta n_A/\Delta t \geq (\Delta n_E/\Delta t)_W$) provoqué par un couple résistant $M_W$ qui en résulte est déterminé comme étant l'instant $t_{Sync}$ lors duquel le gradient du régime d'entrée $dn_E/dt$ atteint la valeur de ce gradient $(\Delta n_E/\Delta t)_W$ ($dn_E/dt = (\Delta n_E/\Delta t)W$), et pour un gradient du régime de sortie inférieur au gradient du régime d'entrée ($\Delta n_A/\Delta t < (\Delta n_E/\Delta t)_W$) provoqué par le couple résistant $M_W$ est déterminé comme étant l'instant $t_{Sync}$ lors duquel le gradient du régime d'entrée $dn_E/dt$ atteint la valeur du gradient du régime de sortie $\Delta n_A/\Delta t$ ($dn_E/dt = \Delta n_A/\Delta t$).

6.  Procédé selon les revendications 3 et 5, **caractérisé en ce que** l'instant optimal ($t_{Sync}$), pour l'obtention du régime synchrone ($n_{Sync}$), pour un gradient du régime de sortie $\Delta n_A/\Delta t \geq (\Delta n_E/\Delta t)_W$ est calculé par l'équation $t_{Sync} = -1/2 F_{Abs} * (\Delta n_E/\Delta t)_{Br}$ et pour un gradient du régime de sortie $\Delta n_A/\Delta t < (\Delta n_E/\Delta t)_W$, **en ce qu'**il est calculé par l'équation $t_{Sync} = 1/2 F_{Abs} * (\Delta n_A/\Delta t - \Delta n_E/\Delta t)$.

7.  Procédé selon les revendications 4 et 5, **caractérisé en ce que** l'instant optimal ($t_{Sync}$) pour l'obtention du régime synchrone ($n_{Sync}$), pour un gradient du régime de sortie $\Delta n_A/\Delta t \geq (\Delta n_E/\Delta t)_W$ est calculé par l'équation $t_{Sync} = T_{Abs}$ et pour un gradient du régime de sortie $\Delta n_A/\Delta t < (\Delta n_E/\Delta t)_W$, **en ce qu'**il est calculé par l'équation $t_{Sync} = T_{Abc} * (1 + ((\Delta n_E/\Delta t)_W - (\Delta n_A/\Delta t)) / (\Delta n_E/\Delta t)_{Br})$.

8.  Procédé selon l'une quelconque des revendications 3, 5 et 6, **caractérisé en ce que** l'intervalle de temps jusqu'à l'émission du signal de désactivation $T_{SA}$ permettant l'ouverture de la soupape de sortie (15), pour un gradient du régime de sorite $\Delta n_A/\Delta t \geq (\Delta n_E/\Delta t)_W$, est calculé par l'équation :

$$T_{SA} = (n_{E\_akt} - n_{A\_akt}) / ((\Delta n_A/\Delta t) - (\Delta n_E/\Delta t)) - T_{TA} + 1/2 F_{Abs} * (\Delta n_E/\Delta t)_{Br} * (1 + 1/2 (\Delta n_E/\Delta t)_{Br} / ((\Delta n_A/\Delta t) - (\Delta n_E/\Delta t))),$$

et pour un gradient du régime de sortie $\Delta n_A/\Delta t < (\Delta n_E/\Delta t)_W$, **en ce qu'**il est calculé par l'équation :

$$T_{SA} = (n_{E\_akt} - n_{A\_akt})/((\Delta n_A/\Delta t)-(\Delta n_E/\Delta t))-T_{TA} - 1/4 F_{Abs} * ((\Delta n_A/\Delta t)-(\Delta n_E/\Delta t)).$$

**9.** Procédé selon l'une quelconque des revendications 4, 5 et 7, **caractérisé en ce que** l'intervalle de temps jusqu'à l'émission du signal de désactivation $T_{SA}$ permettant l'ouverture de la soupape de sortie (15), pour un gradient du régime de sortie $\Delta n_A/\Delta t \geq (\Delta n_E/\Delta t)_W$, est calculé par l'équation :

$$T_{SA} = (n_{E\_akt} - n_{A\_akt})/((\Delta n_A/\Delta t)-(\Delta n_E/\Delta t))-T_{TA} - T_{Abs}*(1+1/2(\Delta n_E/\Delta t)_{Br}/((\Delta n_A/\Delta t)-(\Delta n_E/\Delta t))$$

et pour un gradient du régime de sortie $\Delta n_A/\Delta t < (\Delta n_E/\Delta t)_W$, **en ce qu'**il est calculé par l'équation :

$$T_{SA} = (n_{E\_akt} - n_{A\_akt})/((\Delta n_A/\Delta t)-(\Delta n_E/\Delta t))-T_{TA} - 1/2 T_{Abs} * (1+((\Delta n_E/\Delta t)_W-(\Delta n_A/\Delta t))/(\Delta n_E/\Delta t)_{Br}).$$

**10.** Procédé selon l'une quelconque des revendications 3 à 9, **caractérisé en ce que** l'intervalle de temps jusqu'à l'émission du signal de désactivation ($T_{SA}$) permettant l'ouverture de la soupape de sortie (15), pour un gradient absolu extrêmement faible du régime de sortie ($|\Delta n_A/\Delta t| \ll |\Delta n_E/\Delta t|$ et/ou $\Delta n_A/\Delta t \approx 0$) et pour un couple résistant simultanément négligeable $M_W((\Delta n_E/\Delta t)_W=0 ; \Delta n_E/\Delta t = (\Delta n_E/\Delta t)_{Br})$ **en ce qu'**il est calculé par l'équation :

$$T_{SA} = (n_{A\_akt} - n_{E\_akt})/(\Delta n_E/\Delta t)- T_{TA} + 1/4 F_{Abs} * (\Delta n_E/\Delta t)$$

ou par l'équation

$$T_{SA} = (n_{A\_akt} - n_{E\_akt})/(\Delta n_E/\Delta t)- T_{TA} - 1/2 T_{Abs}.$$

**11.** Procédé selon l'une quelconque des revendications 1 à 10, **caractérisé en ce que** le gradient du régime d'entrée $(\Delta n_E/\Delta t)_W$ qui provoque le couple résistant ($M_W$) est déterminé après le débrayage de la vitesse inférieure et avant la mise en oeuvre de l'effet de freinage du frein de transmission (1).

**12.** Procédé selon la revendication 11, **caractérisé en ce que** le gradient du régime d'entrée $(\Delta n_E/\Delta t)_W$ provoquant le couple résistant ($M_W$) est déterminé après le débrayage de la vitesse inférieure et immédiatement après l'ouverture de la soupape d'entrée (13) ainsi qu'après la fermeture de la soupape de sortie (15).

**13.** Procédé selon l'une quelconque des revendications 1 à 12, **caractérisé en ce que** le temps mort de désactivation $T_{TA}$ et/ou le facteur de désactivation $F_{Abs}$ et/ou la durée de désactivation $T_{Abs}$ du frein de transmission (1) est/sont déterminé(s) au préalable en fonction d'au moins un paramètre de fonctionnement pertinent et sont stockés de manière paramétrée de façon correspondante dans une mémoire de données d'un appareil de commande de transmission de la boîte de vitesse.

**14.** Procédé selon la revendication 13, **caractérisé en ce qu'**au moins la température de fonctionnement du frein de transmission (1) ou, au lieu de cela, la température de fonctionnement de la boîte de vitesse, est utilisée en tant que paramètre de fonctionnement pertinent et est détectée par des capteurs au début d'un changement de vitesse montant et **en ce que**, lors de la détermination de la courbe de régime du régime d'entrée $n_E(t)$ pendant l'opération de désactivation, de l'instant optimal $t_{Sync}$ pour l'obtention du régime synchrone ($n_{Sync}$), et de l'intervalle de temps jusqu'à l'émission du signal de désactivation $T_{SA}$ permettant l'ouverture de la soupape de sortie (15), la valeur stockée de manière paramétrique la plus proche de la valeur de température détectée ou une valeur interpolée au moyen de la valeur de température détectée à partir de valeurs stockées du temps mort de désactivation $T_{TA}$ et/ou du facteur de désactivation $F_{Abs}$ et/ou de la durée de désactivation $T_{Abs}$ du frein de transmission (1) est utilisée.

Fig.1

Fig.2

Fig.3

Fig.4

EP 2 545 304 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19652916 B4
- DE 10305254 A1
- DE 10330517 A1